# EUROPEAN PATENT SPECIFICATION

(11) **EP 3 715 202 B1**
(45) Date of publication and mention of the grant of the patent: **19.01.2022**
(21) Application number: 19744168.6
(22) Date of filing: 28.01.2019
(51) Int. Cl.: B60K 6/485, B60W 10/06, B60W 10/08, B60W 10/107, F16H 61/21, B60K 6/543, B60W 20/30, B60W 30/18, B60K 6/48, F16H 61/662, F16H 61/66

(54) **LEANING VEHICLE**
NEIGEFAHRZEUG
VÉHICULE INCLINABLE

(30) Priority: 29.01.2018 JP 2018012533
(43) Date of publication of application: 30.09.2020
(73) Proprietor: YAMAHA HATSUDOKI KABUSHIKI KAISHA, Iwata-shi Shizuoka 438-8501 (JP)
(72) Inventor: MURAYAMA, Takuji, Iwata-shi, Shizuoka 438-8501 (JP); SEKIGUCHI, Naoki, Iwata-shi, Shizuoka 438-8501 (JP)
(74) Representative: Stöckeler, Ferdinand
(86) International application number: PCT/JP2019/002628
(87) International publication number: WO 2019/146774

(56) References cited:
- EP-A1- 1 911 996
- ES-T3- 2 355 597
- JP-A- H02 102 969
- JP-A- 2003 004 108
- JP-A- 2011 185 444
- JP-A- 2012 225 443

## Description

### [Technical Field]

The present invention relates to a leaning vehicle on which a rubber-belt-type continuously variable transmission device is mounted.

### [Background Art]

Patent Literature 1 proposes a leaning vehicle on which a rubber-belt-type continuously variable transmission device is mounted. The leaning vehicle of Patent Literature 1 is a scooter-type motorcycle on which the rubber-belt-type continuously variable transmission device is mounted. The rubber-belt-type continuously variable transmission device of the leaning vehicle of Patent Literature 1 uses a V belt which is made of composite rubber as a rubber belt.

In the leaning vehicle of Patent Literature 1, when a throttle opening degree rapidly decreases while the leaning vehicle runs with a large throttle opening degree and high power, engine braking occurs. To be more specific, in the leaning vehicle of Patent Literature 1, the engine output rapidly decreases as the throttle opening degree rapidly decreases. As a result, an electric motor of the rubber-belt-type continuously variable transmission device is activated based on a throttle opening degree detection signal detected by a throttle opening degree sensor, and a pressure acting on the rubber belt is significantly increased. This increases the winding diameter of the rubber belt on a sheave of the rubber-belt-type continuously variable transmission device, with the result that the transmission ratio is significantly increased. Consequently, in the leaning vehicle of Patent Literature 1, braking force due to resistance of the rubber-belt-type continuously variable transmission device, the engine, etc. is applied to a rear wheel, and the engine braking occurs. In this connection, the continuously variable transmission device is a device which is configured to continuously changes the transmission ratio by changing the winding diameter of the rubber belt on the sheave. The engine braking, which is different from friction braking which applies braking force to the rear wheel in response to an operation by the rider, applies braking force to the rear wheel by the rubber-belt-type continuously variable transmission device, the engine, etc. The braking force applied to the rear wheel by the engine braking is controlled by a rear wheel braking force controller.

### [Citation List]

### [Patent Literatures]

[Patent Literature 1] Japanese Unexamined Patent Publication No. 2003-4108

### [Summary of Invention]

### [Technical Problem]

Such a leaning vehicle on which a rubber-belt-type continuously variable transmission device is mounted is required to further improve the degree of freedom in controlling braking force applied to a rear wheel by engine braking which is controlled by a rear wheel braking force controller and is different from friction braking by which braking force is applied to a rear wheel in response to an operation by a rider.

An object of the present invention is, in a leaning vehicle on which a rubber-belt-type continuously variable transmission device is mounted, to further improve the degree of freedom in controlling braking force applied to a rear wheel by engine braking which is controlled by a rear wheel braking force controller and is different from friction braking by which braking force is applied to a rear wheel in response to an operation by a rider.

### [Solution to Problem]

By using a leaning vehicle on which a rubber-belt-type continuously variable transmission device is mounted, the inventors of the subject application have thoroughly studied engine braking which is controlled by a rear wheel braking force controller and is different from friction braking by which braking force is applied to a rear wheel in response to an operation by a rider. As a result, the inventors of the subject application have found the following phenomenon: in the leaning vehicle on which the rubber-belt-type continuously variable transmission device is mounted, the braking force applied to the rear wheel by the engine braking controlled by the rear wheel braking force controller is decreased due to deflection of the rubber belt of the rubber-belt-type continuously variable transmission device. The inventors of the subject application have noticed that this phenomenon is particularly prominent when the leaning vehicle on which the rubber-belt-type continuously variable transmission device is mounted reaches the maximum speed.

The leaning vehicle on which the rubber-belt-type continuously variable transmission device is mounted is typically arranged such that the leaning vehicle runs at the maximum speed when the transmission ratio of the rubber-belt-type continuously variable transmission device is a maximum speed transmission ratio which is small transmission ratio. In this regard, when the rubber-belt-type continuously variable transmission device is at the maximum speed transmission ratio, the winding diameter of the rubber belt on the primary sheave becomes long and the groove width of the primary sheave becomes narrowest. In this state, because of high flexibility, the rubber belt of the rubber-belt-type continuously variable transmission device is greatly deflected. When the leaning vehicle shifts to a deceleration state after reaching the maximum speed, the deflection of the rubber belt of the rubber-belt-type continuously variable transmission device is gradually decreased or is eliminated. At this stage, because the groove width of the primary sheave of the rubber-belt-type continuously variable transmission device is unchanged, the winding diameter of the rubber belt on the primary sheave increases. The transmission ratio is therefore decreased by an amount corresponding to the deflection of the rubber belt. Accordingly, in the leaning vehicle on which the rubber-belt-type continuously variable transmission device using the rubber belt is mounted, the braking force applied to the rear wheel by engine braking may be decreased due to the deflection of the rubber belt. For this reason, in a leaning vehicle on which a known rubber-belt-type continuously variable transmission device is mounted, braking force applied to a rear wheel by engine braking is adjusted by a braking force controller to be increased in consideration of an influence of deflection of a rubber belt of the rubber-belt-type continuously variable transmission device. In other words, in the leaning vehicle on which the known rubber-belt-type continuously variable transmission device is mounted, braking force applied to the rear wheel by the engine braking is increased by the rear wheel braking force controller.

In regard to the leaning vehicle on which the rubber-belt-type continuously variable transmission device is mounted, the inventors of the subject application tried to increase the degree of freedom in controlling the braking force which is controlled by the rear wheel braking force controller and is applied to the rear wheel by engine braking. In doing so, the inventors of the subject application thoroughly studied a running state in which braking force is applied to the rear wheel by engine braking in the leaning vehicle on which the rubber-belt-type continuously variable transmission device is mounted. The inventors of the subject application found that, in the leaning vehicle on which the rubber-belt-type continuously variable transmission device is mounted, while in some cases the rider of the vehicle feels comfortable in a running state in which the braking force applied to the rear wheel by the engine braking is large, generally the rider feels comfortable in a running state in which the braking force applied to the rear wheel by the braking force is small. For example, when the leaning vehicle on which the rubber-belt-type continuously variable transmission device is mounted runs in a traffic jam, the vehicle is not frequently accelerated and decelerated as compared to a case where the vehicle runs in a traffic environment without a traffic jam. In this case, the rider feels comfortable with small braking force applied to the rear wheel by the engine braking. Furthermore, when the leaning vehicle on which the rubber-belt-type continuously variable transmission device is mounted runs on inertia along a gentle downward slope, etc., the deceleration is small as compared to a case where the vehicle runs not on inertia along a steep downward slope, etc. In this case, the rider feels comfortable with small braking force applied to the rear wheel by the engine braking. Based on the above, the inventors of the subject application found that the braking force applied to the rear wheel by the engine braking can be decreased in the leaning vehicle on which the rubber-belt-type continuously variable transmission device is mounted, in such a way that, in accordance with the running state of the leaning vehicle, the difference between the maximum speed transmission ratio and the minimum transmission ratio is arranged to be larger than an amount of change of the transmission ratio due to the deflection of the rubber belt of the rubber-belt-type continuously variable transmission device, at least when the leaning vehicle shifts to a deceleration state after reaching the maximum speed. In this connection, the maximum speed transmission ratio is a transmission ratio when the leaning vehicle accelerates and reaches the maximum speed. The minimum transmission ratio is a minimum transmission ratio during a period in which the leaning vehicle decelerates from the maximum speed and ends the deceleration. The inventors of the subject application found that the braking force applied to the rear wheel by the engine braking can be adjusted in the leaning vehicle on which the rubber-belt-type continuously variable transmission device is mounted, by using a rear wheel braking force controller which is able to control the magnitude of the braking force applied to the rear wheel by the engine braking. In other words, the inventors of the subject application found that the degree of freedom in controlling the braking force applied to the rear wheel by the engine braking can be improved by combining the rubber-belt-type continuously variable transmission device with the rear wheel braking force controller.

An example of the rear wheel braking force controller is an electric actuator which is configured to change the winding diameter of the rubber belt of the rubber-belt-type continuously variable transmission device. When the leaning vehicle accelerates to reach the maximum speed and then shifts to the deceleration state, the transmission ratio of the rubber-belt-type continuously variable transmission device becomes smaller than an amount of change of the transmission ratio due to deflection of the rubber belt, from the maximum speed transmission ratio. This amount of change of the transmission ratio due to the deflection of the rubber belt is referred to as a rubber belt change amount. After the shift to the deceleration state, the braking force applied to the rear wheel by the engine braking is further increased as the winding diameter of the rubber belt on the primary sheave is decreased by the electric actuator. In this way, the electric actuator is able to further increase the degree of freedom in controlling the braking force applied to the rear wheel by the engine braking.

Another example of the rear wheel braking force controller is a crankshaft motor generator. The crankshaft motor generator is attached to a crankshaft to be able to apply torque to the crankshaft and to absorb torque from the crankshaft. The crankshaft motor generator is able to control the braking force applied to the rear wheel by the engine braking, by changing the torque applied to the crankshaft or the torque absorbed from the crankshaft. When the leaning vehicle accelerates to reach the maximum speed and then shifts to the deceleration state, the transmission ratio of the rubber-belt-type continuously variable transmission device becomes smaller than an amount of change of the transmission ratio due to deflection of the rubber belt, from the maximum speed transmission ratio. After the shift to the deceleration state, the braking force applied to the rear wheel by the engine braking is further increased as the torque absorbed from the crankshaft by the crankshaft motor generator is further increased. In this way, the crankshaft motor generator is able to further increase the degree of freedom in controlling the braking force applied to the rear wheel by the engine braking.

Another example of the rear wheel braking force controller is a rear wheel motor generator. The rear wheel motor generator is provided to be able to apply torque to the rear wheel and to absorb torque from the rear wheel. The rear wheel motor generator is able to control the braking force applied to the rear wheel by the engine braking, by changing the torque applied to the rear wheel or the torque absorbed from the rear wheel. When the leaning vehicle accelerates to reach the maximum speed and then shifts to the deceleration state, the transmission ratio of the rubber-belt-type continuously variable transmission device becomes smaller than an amount of change of the transmission ratio due to deflection of the rubber belt, from the maximum speed transmission ratio. After the shift to the deceleration state, the braking force applied to the rear wheel by the engine braking is further increased as the torque absorbed from the rear wheel by the rear wheel motor generator is further increased. In this way, the rear wheel motor generator is able to further increase the degree of freedom in controlling the braking force applied to the rear wheel by the engine braking.

As described above, in the deceleration state, the transmission ratio of the rubber-belt-type continuously variable transmission device is changed within a range between the minimum transmission ratio and a transmission ratio which is smaller than the maximum speed transmission ratio by the amount of change of the transmission ratio due to the deflection of the rubber belt. Furthermore, the rear wheel braking force controller controls the magnitude of the braking force applied to the rear wheel. In the leaning vehicle on which the rubber-belt-type continuously variable transmission device is mounted, it is therefore possible to further increase the degree of freedom in controlling the braking force applied to the rear wheel by the engine braking, by using the rear wheel braking force controller.

(1) A leaning vehicle of the present invention includes: a vehicle body frame which leans rightward of the vehicle when turning right and leans leftward of the vehicle when turning left; an engine which is supported by the vehicle body frame and includes a crankshaft by which power is transmitted; at least one front wheel; at least one rear wheel which is provided rearward of the at least one front wheel in a vehicle front-rear direction; a rubber-belt-type continuously variable transmission device which includes a primary sheave connected to the crankshaft to be able to transmit power to the crankshaft, a secondary sheave connected to the at least one rear wheel to be able to transmit power to the at least one rear wheel, and a rubber belt wound into a groove formed in the primary sheave and a groove formed in the secondary sheave so that a winding diameter of the rubber belt is changeable, the rubber-belt-type continuously variable transmission device transmitting power of the engine from the crankshaft to the at least one rear wheel; and a rear wheel braking force controller which is configured to control braking force applied to the at least one rear wheel, the rubber-belt-type continuously variable transmission device being arranged so that a difference between a maximum speed transmission ratio which is a transmission ratio when the leaning vehicle accelerates and reaches maximum speed and a minimum transmission ratio which is a transmission ratio when the leaning vehicle decelerates is larger than a rubber belt change amount which is an amount of change of the transmission ratio due to deflection of the rubber belt when the leaning vehicle reaches the maximum speed and then shifts to a deceleration state, the rear wheel braking force controller including at least one of: (a) an electric actuator which is configured to change the winding diameter of the rubber belt of the rubber-belt-type continuously variable transmission device; (b) a crankshaft motor generator configured to absorb torque transmitted from the crankshaft to the primary sheave and to apply torque to the crankshaft; or (c) a rear wheel motor generator configured to absorb torque from the at least one rear wheel and to apply torque to the at least one rear wheel, and at least after the leaning vehicle reaches the maximum speed and then shifts to the deceleration state, the braking force applied to the at least one rear wheel being controlled by at least one of the electric actuator, the crankshaft motor generator, or the rear wheel motor generator.

According to this arrangement, the leaning vehicle of the present invention on which the rubber-belt-type continuously variable transmission device is mounted is controlled such that the leaning vehicle runs at the maximum speed when the transmission ratio of the rubber-belt-type continuously variable transmission device is a maximum speed transmission ratio which is small transmission ratio. In this state, the rubber belt of the rubber-belt-type continuously variable transmission device is greatly deflected if it is highly flexible. When the leaning vehicle shifts to a deceleration state after reaching the maximum speed, the deflection of the rubber belt of the rubber-belt-type continuously variable transmission device is gradually decreased or is eliminated. At this stage, when the groove width of the primary sheave of the rubber-belt-type continuously variable transmission device is unchanged, the winding diameter of the rubber belt on the primary sheave increases. The transmission ratio is therefore slightly changed by an amount corresponding to the deflection of the rubber belt. In this connection, the rubber-belt-type continuously variable transmission device is configured to change the groove width of the primary sheave in such a way that the transmission ratio is smaller than the rubber belt change amount. The rear wheel braking force controller controls the magnitude of the braking force applied to the rear wheel by the engine braking. The rear wheel braking force controller controls the braking force applied to at least one rear wheel at least after the leaning vehicle reaches the maximum speed and then shifts to the deceleration state, by using at least one of the electric actuator, the crankshaft motor generator, or the rear wheel motor generator. On this account, in the leaning vehicle on which the rubber-belt-type continuously variable transmission device is mounted, the braking force applied to the rear wheel by the engine braking of the rubber-belt-type continuously variable transmission device is small.

When the rear wheel braking force controller is the electric actuator, at least after the shift to the deceleration state, the braking force applied to the rear wheel by the engine braking is further increased as the winding diameter of the rubber belt on the primary sheave is decreased by the electric actuator. To put it differently, by the electric actuator, the minimum transmission ratio of the rubber-belt-type continuously variable transmission device is controlled so that the difference between the maximum speed transmission ratio and the minimum transmission ratio is larger than the rubber belt change amount. In this way, the electric actuator is able to further increase the degree of freedom in controlling the braking force applied to the rear wheel by the engine braking.

When the rear wheel braking force controller is the crankshaft motor generator, at least after the shift to the deceleration state, the braking force applied to the rear wheel by the engine braking is increased as the torque absorbed from the crankshaft by the crankshaft motor generator is increased. In this way, the crankshaft motor generator is able to further increase the degree of freedom in controlling the braking force applied to the rear wheel by the engine braking.

When the rear wheel braking force controller is the crankshaft motor generator, at least after the shift to the deceleration state, the braking force applied to the rear wheel by the engine braking is increased as the torque absorbed from the rear wheel by the rear wheel motor generator is increased. In this way, the rear wheel motor generator is able to further increase the degree of freedom in controlling the braking force applied to the rear wheel by the engine braking.

As described above, at least after the shift to the deceleration state, the rubber-belt-type continuously variable transmission device changes the transmission ratio so that the difference between the maximum speed transmission ratio and the minimum transmission ratio becomes larger than the rubber belt change amount. The rear wheel braking force controller controls the magnitude of the braking force applied to the rear wheel by the engine braking. On this account, in the leaning vehicle on which the rubber-belt-type continuously variable transmission device is mounted, it is possible to further increase the degree of freedom in controlling the braking force applied to the rear wheel by the engine braking controlled by the rear wheel braking force controller rear wheel braking force controller.

(2) According to another aspect of the present invention, the leaning vehicle of the present invention preferably includes the following arrangement, in addition to arrangement (1).

The rear wheel braking force controller includes the electric actuator, and
at least after the leaning vehicle reaches the maximum speed and then shifts to the deceleration state, the electric actuator controls the braking force applied to the at least one rear wheel by adjusting an amount of increase of the winding diameter of the rubber belt on the primary sheave.

According to this arrangement, at least after the leaning vehicle shifts to the deceleration state, the electric actuator included in the rear wheel braking force controller adjusts an amount of increase of the winding diameter of the rubber belt on the primary sheave. Then the rubber-belt-type continuously variable transmission device is controlled to have a transmission ratio which is between the maximum speed transmission ratio and the minimum transmission ratio. With this, the electric actuator is able to control the magnitude of the braking force applied to the rear wheel by the engine braking. On this account, in the leaning vehicle on which the rubber-belt-type continuously variable transmission device is mounted, it is possible to further increase the degree of freedom in controlling the braking force applied to the rear wheel by the engine braking controlled by the rear wheel braking force controller rear wheel braking force controller.

(3) According to another aspect of the present invention, the leaning vehicle of the present invention preferably includes the following arrangement, in addition to arrangement (1).

The rear wheel braking force controller includes the crankshaft motor generator, and
at least after the leaning vehicle reaches the maximum speed and then shifts to the deceleration state, the crankshaft motor generator controls the braking force applied to the at least one rear wheel by adjusting an amount of increase of the torque absorbed from the crankshaft.

According to this arrangement, at least after the leaning vehicle shifts to the deceleration state, the rubber-belt-type continuously variable transmission device adjusts the difference between the maximum speed transmission ratio and the minimum transmission ratio to be larger than the rubber belt change amount. As a result, the braking force applied to the rear wheel by the engine braking is decreased. In this regard, at least after the leaning vehicle shifts to the deceleration state, the crankshaft motor generator included in the rear wheel braking force controller adjusts an amount of increase of the torque absorbed from the crankshaft. To be more specific, by increasing an amount of increase of the torque absorbed from the crankshaft by the crankshaft motor generator, it is possible to increase the braking force applied to the rear wheel by the engine braking. In this way, the crankshaft motor generator is able to control the magnitude of the braking force applied to the rear wheel by the engine braking. On this account, in the leaning vehicle on which the rubber-belt-type continuously variable transmission device is mounted, it is possible to further increase the degree of freedom in controlling the braking force applied to the rear wheel by the engine braking controlled by the rear wheel braking force controller.

(4) According to another aspect of the present invention, the leaning vehicle of the present invention preferably includes the following arrangement, in addition to arrangement (1).

The rear wheel braking force controller includes the rear wheel motor generator, and
at least after the leaning vehicle reaches the maximum speed and then shifts to the deceleration state, the rear wheel motor generator controls the braking force applied to the at least one rear wheel by adjusting an amount of increase of the torque absorbed from the at least one rear wheel.

According to this arrangement, at least after the leaning vehicle shifts to the deceleration state, the rubber-belt-type continuously variable transmission device adjusts the difference between the maximum speed transmission ratio and the minimum transmission ratio to be larger than the rubber belt change amount. As a result, the braking force applied to the rear wheel by the engine braking is decreased. In this regard, at least after the leaning vehicle shifts to the deceleration state, the rear wheel motor generator included in the rear wheel braking force controller adjusts an amount of increase of the torque absorbed from the rear wheel. To be more specific, by increasing an amount of increase of the torque absorbed from the rear wheel by the rear wheel motor generator, it is possible to increase the braking force applied to the rear wheel by the engine braking. In this way, the rear wheel motor generator is able to control the magnitude of the braking force applied to the rear wheel by the engine braking. On this account, in the leaning vehicle on which the rubber-belt-type continuously variable transmission device is mounted, it is possible to further increase the degree of freedom in controlling the braking force applied to the rear wheel by the engine braking controlled by the rear wheel braking force controller rear wheel braking force controller.

(5) According to another aspect of the present invention, the leaning vehicle of the present invention preferably includes the following arrangement, in addition to any one of the arrangements (1) to (4). The rear wheel braking force controller changes control of the braking force applied to the at least one rear wheel by using at least one of the electric actuator, the crankshaft motor generator, or the rear wheel motor generator, in accordance with a running state of the leaning vehicle.

According to this arrangement, in the leaning vehicle on which the rubber-belt-type continuously variable transmission device is mounted, in some cases the rider feels comfortable in a running state in which the braking force applied to the rear wheel by the engine braking is small. Meanwhile, in the leaning vehicle on which the rubber-belt-type continuously variable transmission device is mounted, in other cases the rider feels comfortable in a running state in which the braking force applied to the rear wheel by the engine braking is large. In consideration of these cases, the rear wheel braking force controller changes the control of the braking force applied to at least one rear wheel, in accordance with the running state of the leaning vehicle. In the leaning vehicle on which the rubber-belt-type continuously variable transmission device is mounted, it is therefore possible to further increase the degree of freedom in controlling the braking force applied to the rear wheel by the engine braking.

(6) According to another aspect of the present invention, the leaning vehicle of the present invention preferably includes the following arrangement, in addition to arrangement (5).

When a small braking force condition is satisfied, the rear wheel braking force controller controls the braking force applied to the at least one rear wheel to be smaller than braking force when the small braking force condition is not satisfied, the small braking force condition being a condition in which a running state of the leaning vehicle corresponds to at least one of a case where the leaning vehicle runs down a slope having an inclination angle equal to or smaller than a gradual slope angle, a case where at least two riders ride on the leaning vehicle, a case where the leaning vehicle runs on a congested road, or a case where the leaning vehicle runs on a road in an urban area or a residential area.

According to this arrangement, in the leaning vehicle on which the rubber-belt-type continuously variable transmission device is mounted, a running state in which the rider feels comfortable when the braking force applied to the rear wheel by the engine braking is small is set as the small braking force condition. When the small braking force condition is satisfied, the rear wheel braking force controller is able to apply, to the rear wheel, braking force which is smaller than braking force when the small braking force condition is not satisfied. In the leaning vehicle on which the rubber-belt-type continuously variable transmission device is mounted, it is therefore possible to further increase the degree of freedom in controlling the braking force applied to the rear wheel by the engine braking. The gradual slope angle indicates an inclination angle of a slope inclined with respect to a horizontal plane, and can be set at any angle. For example, when a small motorcycle having two riders thereon runs at a speed of 30 to 50 kilometers per hour with the throttle opening degree being in a full-closed state, the gradual slope angle is set at 1 degree with respect to the horizontal plane.

(7) According to another aspect of the present invention, the leaning vehicle of the present invention preferably includes the following arrangement, in addition to arrangement (5).

When a large braking force condition is satisfied, the rear wheel braking force controller controls the braking force applied to the at least one rear wheel to be larger than braking force in a case where the large braking force condition is not satisfied, the large braking force condition being a condition in which a running state of the leaning vehicle corresponds to at least one of a case where the leaning vehicle overtakes a vehicle running in front of the leaning vehicle in a vehicle front-rear direction, a case where the leaning vehicle runs down a slope having a larger inclination angle than the gradual slope angle, a case where a luggage is mounted on the leaning vehicle, a case where distance in the vehicle front-rear direction between the leaning vehicle and a vehicle running in front of the leaning vehicle in the vehicle front-rear direction is short, or a case where a signal in front of the leaning vehicle in the vehicle front-rear direction indicates stop.

In this arrangement, in the leaning vehicle on which the rubber-belt-type continuously variable transmission device is mounted, a running state in which the rider feels comfortable when the braking force applied to the rear wheel by the engine braking is large is set as the large braking force condition. When the large braking force condition is satisfied, the rear wheel braking force controller is able to apply, to the rear wheel, braking force which is larger than braking force when the large braking force condition is not satisfied. In the leaning vehicle on which the rubber-belt-type continuously variable transmission device is mounted, it is therefore possible to further increase the degree of freedom in controlling the braking force applied to the rear wheel by the engine braking.

### <Definitions of Maximum Speed Transmission Ratio, Minimum Transmission Ratio, and Rubber Belt Change Amount>

In the present invention, the maximum speed transmission ratio is a transmission ratio when the leaning vehicle accelerates and reaches the maximum speed. The minimum transmission ratio is a minimum transmission ratio during a period in which the leaning vehicle decelerates from the maximum speed and ends the deceleration. The rubber belt change amount is an amount of change of the transmission ratio due to deflection of the rubber belt.

### <Definitions of Vehicle Up-Down Direction, Vehicle Left-Right Direction, and Vehicle Front-Rear Direction>

In the present invention, a vehicle front-rear direction of a leaning vehicle is a front-rear direction for a driver seated on a seat of the leaning vehicle. A vehicle left-right direction of the leaning vehicle is a left-right direction for the driver seated on the seat of the leaning vehicle. The vehicle front-rear direction and the vehicle left-right direction are directions parallel to the road surface. A traveling direction of the leaning vehicle is close to the vehicle front-rear direction of the leaning vehicle but does not always coincide with the vehicle front-rear direction. A vehicle up-down direction of the leaning vehicle is identical with a road surface perpendicular direction of the leaning vehicle.

### <Definition of Generator>

In the present invention, a motor generator is a device which has both a function as an electric motor rotated by electric power supplied from a battery to apply torque and a function as a generator which absorbs torque and stores electric power to the battery.

### <Other Definitions>

In the present invention, an end portion of a member indicates a portion constituted by an end and its surroundings of the member.

In this specification, an expression "a member A is provided forward of a member B" indicates the following state. The member A is provided in front of a plane which passes the front-most end of the member B and is orthogonal to the front-rear direction. In this connection, the members A and B may or may not be lined up in the front-rear direction. This applies to rearward, upward, downward, leftward, and rightward.

In this specification, an expression "a member A is provided in front of a member B" indicates the following state. The members A and B are lined up in the front-rear direction and a part of the member A, the part facing the member B, is provided in front of the member B. According to this definition, when a part of the front surface of the member B, the part facing the member A, is the front-most end of the member B, the member A is provided forward of the member B. According to the definition, when a part of the front surface of the member B, the part facing the member A, is not the front-most end of the member B, the member A may or may not be provided forward of the member B. This applies to the directions other than the front-rear direction. (That is to say, this applies to the directions other than "forward of', such as "rearward of', "leftward of', and "rightward of'.) The front surface of the member B is a surface which is viewable when the member B is viewed from the front side. Depending on the shape of the member B, the front surface of the member B may be formed of plural surfaces, instead of a single continuous surface. This applies to rearward, upward, downward, leftward, and rightward.

In the present invention, terms "including", "comprising", "having", and derivatives thereof are used to encompass not only listed items and equivalents thereof but also additional items. The terms "mounted", "connected", and "coupled" are used in broad sense. To be more specific, the terms encompass not only directly mounting, connection, and coupling but also indirect mounting, connection, and coupling. Furthermore, the terms "connected" and "coupled" do not merely indicate physical or mechanical connection and coupling. These terms encompass direct or indirect electric connection and coupling.

Unless otherwise defined, all terms (technical and scientific terms) used in this specification indicate meanings typically understood by a person with ordinary skill in the art in the technical field to which the present invention belongs. Terms defined in typical dictionaries indicate meanings used in related technologies and in the context of the present invention. The terms are not interpreted ideally or excessively formally.

In this specification, the term "preferable" is non-exclusive. The term "preferable" means "preferable but not limited to". In this specification, an arrangement which is "preferable" exerts at least the above-described effects of the arrangement (1) above. In this specification, the term "may" is non-exclusive. The term "may" indicate "may but not must". In this specification, an arrangement which is explained by using the term "may" exerts at least the above-described effects of the arrangement (1) above.

In the claims, when the number of a constituent feature is not clearly specified and the constituent feature is expressed in a singular form in English, the number of the constituent feature may be more than one in the present invention. In the present invention, the number of the constituent features may be only one.

In the present invention, the arrangements of the above-described different aspects may be variously combined.

Before an embodiment of the present invention is detailed, it is informed that the present invention is not limited to the configurations and layout of elements described below and/or shown in drawings. The present invention may be implemented as another embodiment, or as an embodiment with various changes. Furthermore, the present invention may be implemented by suitably combining below-described modifications.

### [Advantageous Effects]

A leaning vehicle of the present invention, on which a rubber-belt-type continuously variable transmission device is mounted, is able to further improve the degree of freedom in controlling braking force applied to a rear wheel by engine braking which is controlled by a rear wheel braking force controller and is different from friction braking by which braking force is applied to a rear wheel in response to an operation by a rider.

### [Brief Description of Drawings]

FIG. 1 is a schematic representation of the structure of a leaning vehicle of an embodiment.
FIG. 2 is a left side view of a motorcycle of a specific example.
FIG. 3 is a front view showing the motorcycle which is turning.
FIG. 4 is a block diagram schematically showing the structure of the motorcycle.
FIG. 5 is a block diagram schematically showing the structure of an ECU of the motorcycle.
FIG. 6 is a cross section of a rubber-belt-type continuously variable transmission device of the motorcycle.
FIG. 7 is a schematic cross section showing a state of a rubber belt of the rubber-belt-type continuously variable transmission device.
FIG. 8 is an example of a transmission ratio map in which a throttle opening degree, an engine rotation speed, vehicle speed, and a transmission ratio are associated.
FIG. 9 is a block diagram schematically showing the structure of a motorcycle of a modification.
FIG. 10 is a block diagram schematically showing the structure of an ECU of the motorcycle of the modification.
FIG. 11 is a modification of a transmission ratio map in which a throttle opening degree, an engine rotation speed, vehicle speed, and a transmission ratio are associated.

### [Description of Embodiments]

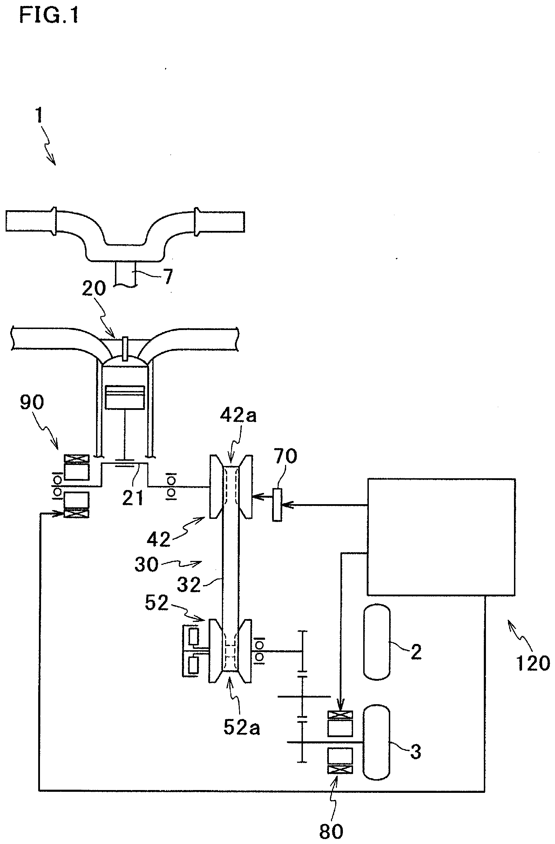

The following will describe a leaning vehicle 1 of an embodiment of the present invention with reference to the schematic diagram in FIG. 1. As shown in FIG. 1, the leaning vehicle 1 includes a vehicle body frame 7, an engine 20, a front wheel 2, a rear wheel 3, a rubber-belt-type continuously variable transmission device 30, and a rear wheel braking force controller 120.

The vehicle body frame 7 leans rightward of the vehicle when turning right and leans leftward of the vehicle when turning left. The engine 20 is supported by the vehicle body frame 7. The engine 20 includes a crankshaft 21 which transmits power. The number of the front wheels 2 is at least one. The number of the rear wheels 3 is at least one. The rear wheel 3 is provided rearward of the front wheel 2 in the vehicle front-rear direction.

The rubber-belt-type continuously variable transmission device 30 transmits power of the engine 20 from the crankshaft 21 to the rear wheel 3. The rubber-belt-type continuously variable transmission device 30 includes a primary sheave 42, a secondary sheave 52, and a rubber belt 32. The primary sheave 42 is connected to the crankshaft 21 to be able to transmit power to the crankshaft 21. The secondary sheave 52 is connected to the rear wheel 3 to be able to transmit power to the rear wheel 3. The rubber belt 32 is wound into a groove 42a formed in the primary sheave 42 and a groove 52a formed in the secondary sheave 52 so that each winding diameter of the rubber belt 32 is changeable.

The rubber-belt-type continuously variable transmission device 30 is arranged so that a difference between the maximum speed transmission ratio and the minimum transmission ratio is larger than a rubber belt change amount. In this connection, the maximum speed transmission ratio is a transmission ratio when the leaning vehicle 1 accelerates and reaches the maximum speed. The minimum transmission ratio is a minimum transmission ratio during a period in which the leaning vehicle 1 decelerates from the maximum speed and ends the deceleration. The rubber belt change amount is an amount of change of the transmission ratio due to deflection of the rubber belt 32, when the leaning vehicle 1 shifts to a deceleration state after reaching the maximum speed.

The rear wheel braking force controller 120 controls braking force applied to the rear wheel 3. The rear wheel braking force controller 120 includes at least one of an electric actuator 70, a crankshaft motor generator 90, or a rear wheel motor generator 80. The rear wheel braking force controller 120 controls the braking force applied to at least one rear wheel 3 at least after the leaning vehicle 1 reaches the maximum speed and then shifts to the deceleration state, by using at least one of the electric actuator 70, the crankshaft motor generator 90, or the rear wheel motor generator 80.

The electric actuator 70 is configured to change the winding diameter of the rubber belt 32 of the rubber-belt-type continuously variable transmission device 30. To be more specific, the electric actuator 70 changes the width of the groove 42a of the primary sheave 42 or the width of the groove 52a of the secondary sheave 52.

The crankshaft motor generator 90 is configured to absorb torque transmitted from the crankshaft 21 to the primary sheave 42 and to apply torque to the crankshaft 21. To be more specific, the crankshaft motor generator 90 applies torque in the reverse rotational direction to the crankshaft 21, so as to absorb torque from the crankshaft 21. Alternatively, the crankshaft motor generator 90 applies torque in the positive rotational direction to the crankshaft 21, so as to apply torque to the crankshaft 21.

The rear wheel motor generator 80 absorbs torque from the rear wheel 3 and applies torque to the rear wheel 3. To be more specific, the rear wheel motor generator 80 applies torque in the reverse rotational direction to the rear wheel 3 so as to absorb torque from the rear wheel 3. Alternatively, the rear wheel motor generator 80 applies torque in the positive rotational direction to the rear wheel 3 so as to apply torque to the rear wheel 3.

With the arrangements above, the leaning vehicle 1 of the present embodiment exerts the following effects.

The leaning vehicle 1 on which the rubber-belt-type continuously variable transmission device 30 is mounted is controlled such that the leaning vehicle 1 runs at the maximum speed when the transmission ratio of the rubber-belt-type continuously variable transmission device 30 is a maximum speed transmission ratio which is small transmission ratio. In this state, the rubber belt 32 of the rubber-belt-type continuously variable transmission device 30 is greatly deflected if it is highly flexible. When the leaning vehicle 1 shifts to a deceleration state after reaching the maximum speed, the deflection of the rubber belt 32 of the rubber-belt-type continuously variable transmission device 30 is gradually decreased or is eliminated. At this stage, when the groove width of the primary sheave 42 of the rubber-belt-type continuously variable transmission device 30 is unchanged, the winding diameter of the rubber belt 32 on the primary sheave 42 increases. The transmission ratio is therefore slightly changed by an amount corresponding to the deflection of the rubber belt 32. In this connection, the rubber-belt-type continuously variable transmission device 30 is configured to change the groove width of the primary sheave in such a way that the difference between the maximum speed transmission ratio and the minimum transmission ratio is larger than the rubber belt change amount. In other words, in the present embodiment, the groove width of the primary sheave 42 of the rubber-belt-type continuously variable transmission device 30 is decreased. Meanwhile, the winding diameter of the rubber belt 32 on the primary sheave 42 is increased. As a result, the transmission ratio of the rubber-belt-type continuously variable transmission device 30 is decreased. The rear wheel braking force controller 120 controls the magnitude of the braking force applied to the rear wheel 2 by the engine braking. The rear wheel braking force controller 120 controls the braking force applied to at least one rear wheel 2 at least after the leaning vehicle 1 reaches the maximum speed and then shifts to the deceleration state, by using at least one of the electric actuator 70, the crankshaft motor generator 90, or the rear wheel motor generator 80. On this account, in the leaning vehicle 1 on which the rubber-belt-type continuously variable transmission device 30 is mounted, the braking force applied to the rear wheel 3 by the engine braking of the rubber-belt-type continuously variable transmission device 30 is small.

When the rear wheel braking force controller 120 is the electric actuator 70, at least after the shift to the deceleration state, the braking force applied to the rear wheel 3 by the engine braking is further increased as the winding diameter of the rubber belt 32 on the primary sheave 42 is decreased by the electric actuator 70. To put it differently, by the electric actuator 70, the minimum transmission ratio of the rubber-belt-type continuously variable transmission device 30 is controlled so that the difference between the maximum speed transmission ratio and the minimum transmission ratio is larger than the rubber belt change amount. In this way, the electric actuator 70 is able to further increase the degree of freedom in controlling the braking force applied to the rear wheel 3 by the engine braking.

When the rear wheel braking force controller 120 is the crankshaft motor generator 90, at least after the shift to the deceleration state, the braking force applied to the rear wheel 3 by the engine braking is increased as the torque absorbed from the crankshaft 21 by the crankshaft motor generator 90 is increased. In this way, the crankshaft motor generator 90 is able to further increase the degree of freedom in controlling the braking force applied to the rear wheel 3 by the engine braking.

When the rear wheel braking force controller 120 is the crankshaft motor generator 80, at least after the shift to the deceleration state, the braking force applied to the rear wheel 3 by the engine braking is increased as the torque absorbed from the crankshaft 3 by the rear wheel motor generator 80 is increased. In this way, the rear wheel motor generator 80 is able to further increase the degree of freedom in controlling the braking force applied to the rear wheel 3 by the engine braking.

As described above, at least after the shift to the deceleration state, the rubber-belt-type continuously variable transmission device 30 changes the transmission ratio so that the difference between the maximum speed transmission ratio and the minimum transmission ratio becomes larger than the rubber belt change amount. The rear wheel braking force controller 120 controls the magnitude of the braking force applied to the rear wheel 3 by the engine braking. On this account, in the leaning vehicle 1 on which the rubber-belt-type continuously variable transmission device 30 is mounted, it is possible to further increase the degree of freedom in controlling the braking force applied to the rear wheel 3 by the engine braking controlled by the rear wheel braking force controller 120.

### (Specific Example)

The following will describe a specific example of the embodiment of the present invention with reference to drawings. A motorcycle 1 of the specific example of the embodiment of the present invention is an example of a leaning vehicle of the present invention. Hereinafter, a vehicle front-rear direction, a vehicle left-right direction, and a vehicle up-down direction indicate a front-rear direction, a left-right direction, and an up-down direction for a rider seated on a later-described seat 8 of the motorcycle 1, respectively. In this regard, it is assumed that the motorcycle is provided on a horizontal plane. The signs F, B, L, R, U, and D in the figures indicate forward, rearward, leftward, rightward, upward, and downward, respectively.

### [Overall Structure of Motorcycle]

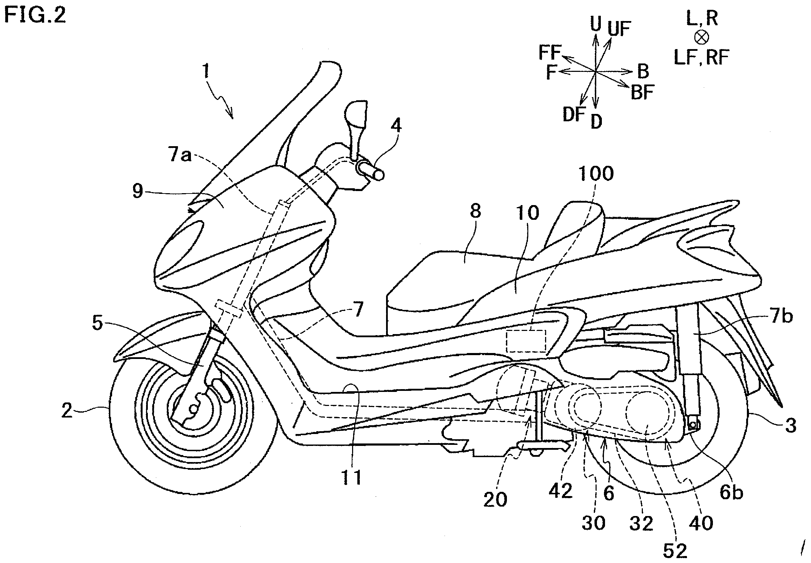

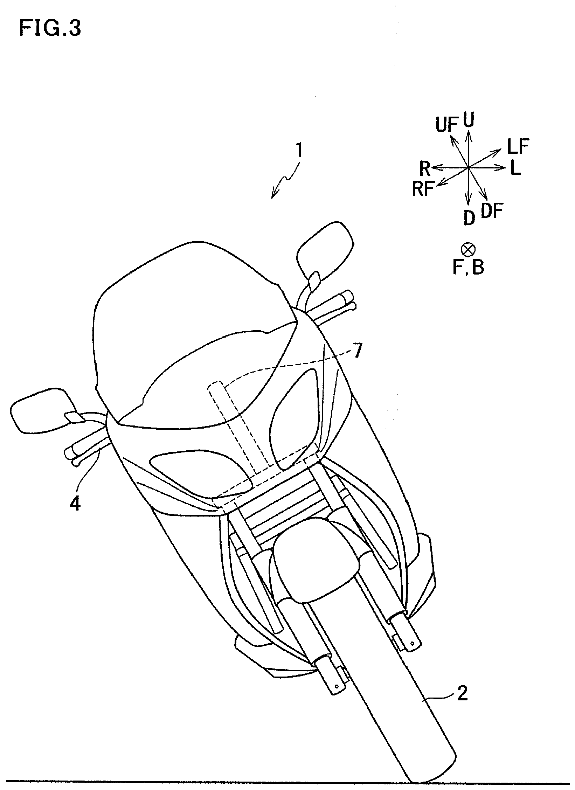

The overall structure of the motorcycle 1 of the specific example will be described with reference to FIG. 2 and FIG. 3. FIG. 3 shows the motorcycle 1 which is provided in an upright state on a horizontal road surface. The motorcycle 1 includes a front wheel 2 and a rear wheel 3 which are wheels and a vehicle body frame 7.

The vehicle body frame 7 is an underbone-type vehicle body frame. The vehicle body frame 7 leans rightward of the vehicle 1 when turning right and leans leftward of the vehicle 1 when turning left. In FIG. 2, only part of the vehicle body frame 7 is indicated by dotted lines.

The vehicle body frame 7 is pipe-shaped and includes a head pipe 7a at a front portion. A steering shaft (not illustrated) is rotatably inserted into the head pipe 7a. The upper end portion of the steering shaft is connected to a handle unit 4. Upper end portions of paired front forks 5 are secured to the handle unit 4. A lower end portion of each front fork 5 supports the front wheel 2.

The vehicle body frame 7 supports the engine unit 6 in a swingable manner. The engine unit 6 is provided below an upper end of a later-described seat 8. A rear end portion of the engine unit 6 supports the rear wheel 3. The engine unit 6 is connected to one end portion of the rear suspension 7b at a boss portion 6b. The other end portion of the rear suspension 7b is attached to the vehicle body frame 7.

The seat 8 is supported at an upper part of the vehicle body frame 7. An upper portion of each front fork 5 is covered with a front cover 9. Side covers 10 are provided straight below the seat 8. Step boards 11 are provided between the front cover 9 and the side covers 10. The step boards 11 are provided on the left and right sides of a lower portion of the motorcycle 1, respectively.

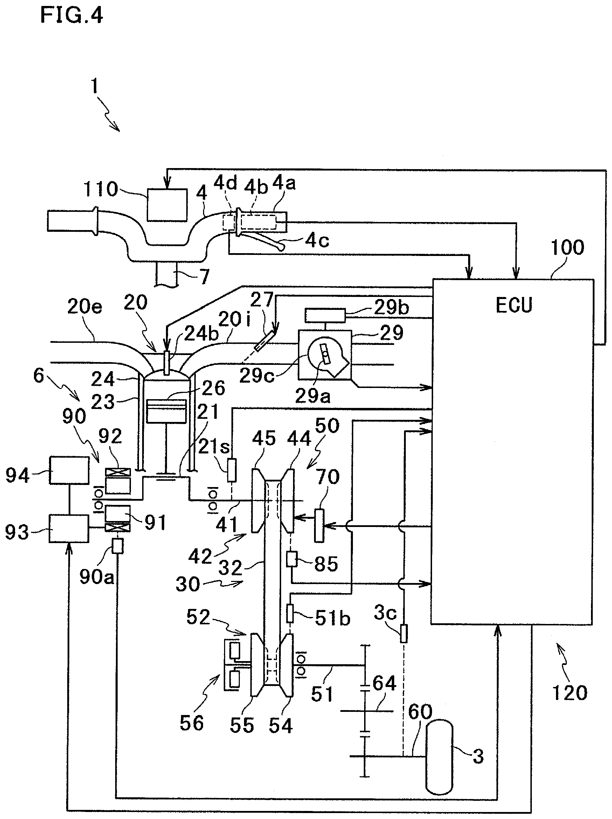

A fuel tank (not illustrated) is provided straight below the seat 8. The vehicle body frame 7 supports a battery 94 (see FIG. 4) which supplies electric power to electronic apparatuses such as later-described sensors and an ECU (Electronic Control Unit, controller) 100. The ECU 100 is configured to control the components of the motorcycle 1.

The handle unit 4, the steering shaft, the front forks 5, and the front wheel 2 are provided to integrally rotate in the left-right direction about the central axis of the steering shaft. The front wheel 2 is steered by an operation of the handle unit 4. As the handle unit 4 is rotated in the left-right direction, a plane passing through the center in the width direction of the front wheel 2 is inclined with respect to the front-rear direction (FB direction) of the vehicle 1.

Arrows UF, DF, FF, BF, LF, and RF in FIG. 2 and FIG. 3 indicate upward, downward, forward, rearward, leftward, and rightward of the vehicle body frame 7, respectively. In FIG. 2 and FIG. 3, an up-down direction (UFDF direction) of the vehicle body frame 7 is in parallel to the axial direction of the head pipe 7a of the vehicle body frame 7. A left-right direction (LFRF direction) of the vehicle body frame 7 is orthogonal to a plane which passes through the center in the width direction of the vehicle body frame 7. A front-rear direction (FFBF direction) of the vehicle body frame 7 is orthogonal to both the up-down direction (UFDF direction) of the vehicle body frame 7 and the left-right direction (LFRF direction) of the vehicle body frame 7. In FIG. 2, the vehicle 1 is provided in an upright state on a horizontal road surface. For this reason, the left-right direction of the vehicle 1 coincides with the left-right direction of the vehicle body frame 7.

A leaning direction of the vehicle body frame 7 when the motorcycle 1 is turning will be described with reference to FIG. 3. FIG. 3 is a front view showing that the motorcycle shown in FIG. 2 is turning. In other words, FIG. 3 shows the motorcycle 1 which is provided on a horizontal road surface while the vehicle body frame 7 of the motorcycle 1 is inclined.

The motorcycle 1 is a leaning vehicle. As shown in FIG. 3, the vehicle body frame 7 leans rightward of the vehicle 1 when turning right and leans leftward of the vehicle 1 when turning left. When the vehicle body frame 7 leans, the vehicle left-right direction (LR direction) of the vehicle 1 does not coincide with the left-right direction (LFRF direction) of the vehicle body frame 7 in front view. When the vehicle body frame 7 leans in the left-right direction, the up-down direction (UD direction) of the vehicle 1 does not coincide with the up-down direction (UFDF direction) of the vehicle body frame 7 in front view. When viewed in the up-down direction, the vehicle front-rear direction (FB direction) of the vehicle 1 coincides with the front-rear direction (FFBF direction) of the vehicle body frame 7. After the handle unit 4 is rotated, a plane, which passes through the center in the width direction of the front wheel 2, leans relative to the vehicle front-rear direction (FB direction) of the vehicle 1 and the front-rear direction (FFBF direction) of the vehicle body frame 7, when viewed in the up-down direction. A traveling direction of the vehicle 1 does not always coincide with the front-rear direction of the vehicle 1.

As shown in FIG. 4, the handle unit 4 is provided with an accelerator grip 4a and a brake lever 4c. A right grip of the handle unit 4 constitutes the accelerator grip 4a. The accelerator grip 4a is operated by the rider to rotate. The accelerator grip 4a is operated to adjust output of the engine. The brake lever 4c is provided at the right grip of the handle unit 4. The brake lever 4c is operated by the rider. The brake lever 4c is operated for breaking the rotation of the front wheel 2. Furthermore, the handle unit 4 is provided with switches such as a main switch. A display device 110 is provided on the handle unit 4. The display device 110 is configured to display vehicle speed, engine rotation speed, and the like. The display device 110 is provided with an indicator (indicator lamp).

### [Structure of Engine Unit]

The structure of the engine unit 6 will be described with reference to FIG. 4 to FIG. 8. In FIG. 4, elements connecting later-described members, i.e., the crankshaft 21, the rubber-belt-type continuously variable transmission device 30, the rear wheel motor generator 80, the crankshaft motor generator 90, the clutch 56, and the rear wheel 3, are schematically indicated by linear lines. The elements schematically indicated by linear lines and connecting the rubber-belt-type continuously variable transmission device 30, the rear wheel motor generator 80, the crankshaft motor generator 90, the clutch 56, and the rear wheel 3 between the crankshaft 21 and the rear wheel 3 are power transmission paths indicating paths of mechanically transmitted power.

As shown in FIG. 4, the engine unit 6 includes the engine main body unit 20, the rubber-belt-type continuously variable transmission device 30, and the electric actuator 70. The engine main body unit 20 is a specific example of the engine 20 of the embodiment above. The engine main body unit 20 is equivalent to an engine of the present invention. The rubber-belt-type continuously variable transmission device 30 is configured to transmit the power of the engine main body unit 20 to the rear wheel 3. In the present embodiment, the rubber-belt-type continuously variable transmission device 30 is a continuously variable transmission device using the rubber belt 32. The rubber-belt-type continuously variable transmission device 30 includes the primary sheave 42 and the secondary sheave 52. As shown in FIG. 2, the primary sheave 42 is provided forward of the secondary sheave 52 in the vehicle front-rear direction. As shown in FIG. 2 and FIG. 4, the rubber-belt-type continuously variable transmission device 30 includes the rubber belt 32 which is wound on the primary sheave 42 and the secondary sheave 52.

To begin with, the engine main body unit 20 will be described. The engine main body unit 20 is a single-cylinder engine having one cylinder. The engine main body unit 20 is a four-stroke one-cycle engine which repeats an intake process, a compression process, a combustion process (expansion process), and an exhaust process.

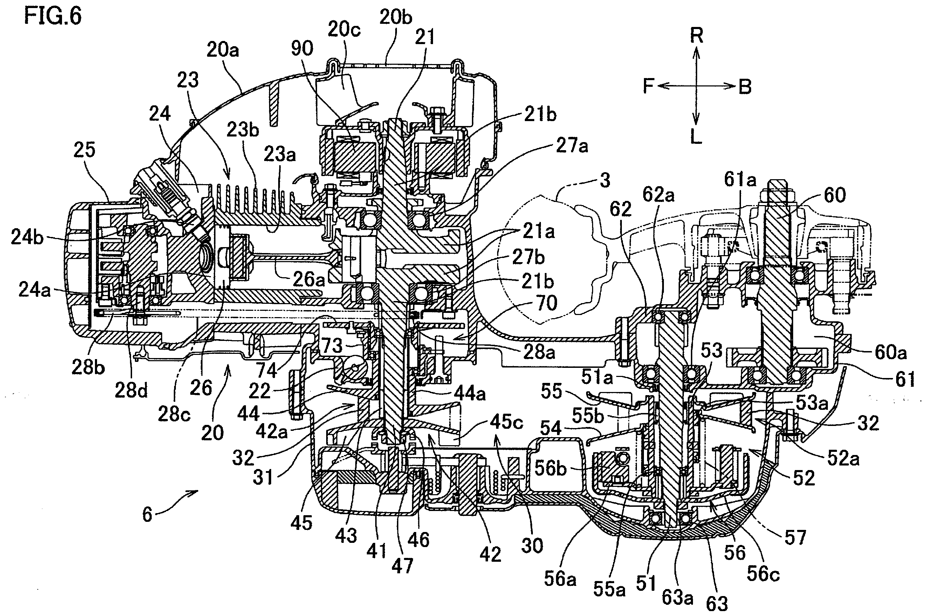

As shown in FIG. 4 and FIG. 6, the engine main body unit 20 includes a crankcase member 22 in which a crankshaft 21 is accommodated, a cylinder body 23, a cylinder head 24, and a head cover 25. The head cover 25 constitutes a front portion of the engine unit 6. The cylinder head 24 is connected to a rear end portion of the head cover 25. The cylinder body 23 is connected to a rear end portion of the cylinder head 24.

The engine main body unit 20 is a forced air-cooled engine. The engine main body unit 20 includes a shroud 20a. The shroud 20a covers the whole circumference of the cylinder body 23 and the cylinder head 24. The shroud 20a covers a right side portion of the crankcase member 22. An air inlet 20b is formed in a right side portion of the shroud 20a. At a front portion of the shroud 20a, an air outlet (not illustrated) is formed. A right end portion of the later-described crankshaft 21 protrudes from the crankcase member 22 and is connected to a cooling fan 20c. The cooling fan 20c is rotationally driven by the rotation of the crankshaft 21. As the cooling fan 20c is driven, air is introduced into the shroud 20a through the air inlet 20b. As the air introduced into the shroud 20a makes contact with cooling fins 45c of the later-described cylinder body 23, the cylinder body 23 radiates heat. The air introduced into the shroud 20a is discharged through an air outlet.

A cylinder hole 23a is formed in the cylinder body 23. The center axis of the cylinder hole 23a is a cylinder axial line. The engine main body unit 20 is mounted on the vehicle body frame 7 (see FIG. 2), with its cylinder axial line being significantly tilted forward. The inclination angle of the cylinder axial line with respect to the horizontal direction is 0 degrees or greater and 45 degrees or less. A piston 26 is slidably housed inside the cylinder hole 23a. A combustion chamber 24a is formed by a lower surface of the cylinder head 24, the cylinder hole 23a, and the piston 26. The cylinder head 24 includes an ignition plug (ignition device) 24b. The ignition plug 24b is configured to ignite a mixture gas of fuel and air in the combustion chamber 24a.

The crankshaft 21 includes two crank webs 21a and two main shafts 21b. The two crank webs 21a are provided between the two main shafts 21b. The two crank webs 21a are connected to each other by an eccentric shaft (not illustrated). The eccentric shaft is a connector by which the two crank webs 21a are connected. The central axis of the eccentric shaft is eccentric from the central axis of the crankshaft 21. The eccentric shaft of the crankshaft 21 is connected to the piston 26 by a connecting rod 26a. A bearing 27a is provided to the right of the right crank web 21a. A bearing 27b is provided to the left of the left crank web 21a. The crankshaft 21 is supported by the crankcase member 22 via the bearing 27a and the bearing 27b. A driving cam chain sprocket 28a is fitted to the crankshaft 21. In the cylinder head 24, a driven cam chain sprocket 28b is provided. A cam chain 28c is provided to bridge the driving cam chain sprocket 28a and the driven cam chain sprocket 28b. The driven cam chain sprocket 28b is attached to a valve driving camshaft 28d. The torque of the crankshaft 21 is transmitted to the valve driving camshaft 28d via the cam chain 28c. In sync with the crankshaft 21, the valve driving camshaft 28d opens and closes an intake valve and an exhaust valve which are not illustrated, at predetermined timings.

As shown in FIG. 4, the cylinder head 24 includes an intake pipe 20i. In the intake pipe 20i, an injector 27 is provided to inject fuel stored in a fuel tank (not illustrated) into the intake pipe 20i. The injector 27 is connected to the fuel tank via a fuel hose (not illustrated). The fuel in the fuel tank is supplied to the fuel hose with a pressure by a fuel pump (not illustrated). The fuel injected by the injector 27 is supplied to the combustion chamber 24a. The injector 27 is an electronically-controlled fuel supplier. An amount of fuel injected by the injector 27 is controlled by the ECU 100. The cylinder head 24 is connected to an exhaust pipe 20e. Through the exhaust pipe 20e, exhaust gas generated by the combustion of fuel is exhausted.

The intake pipe 20i is connected to a throttle body 29. A throttle valve 29a is provided in the throttle body 29. The throttle valve 29a is configured to adjust an amount of air flowing in the throttle body 29. At an end portion of the intake pipe 20i upstream of the throttle body 29, an air cleaner (not illustrated) is provided. The air cleaner includes an air inlet through which the atmospheric air is sucked. The atmospheric air sucked into the intake pipe 20i through the air inlet flows into the throttle body 29. The air having passed through the throttle valve 29a passes through the intake pipe 20i and reaches the combustion chamber 24a. The throttle valve 29a is an electronically-controlled throttle. The throttle body 29 includes a throttle actuator 29b. The throttle actuator 29b opens and closes the throttle valve 29a by means of electronic control. The throttle actuator 29b includes a motor which is driven by an electric signal supplied from the ECU 100. An opening degree of the throttle valve 29a is termed a throttle opening degree. The ECU 100 controls the throttle opening degree by changing the electric signal supplied to the motor.

The piston 26 is connected to the crankshaft 21 which is provided in the crankcase member 22. As the fuel supplied to the combustion chamber 24a burns, the piston 26 reciprocates. The crankshaft 21 is rotated in response to the reciprocation of the piston 26.

The crankshaft 21 is connected to a crankshaft motor generator 90. In other words, the crankshaft 21 and the crankshaft motor generator 90 are provided to be coaxial. In this connection, when the crankshaft motor generator 90 and the crankshaft 21 are coaxial, the rotational axis of the crankshaft motor generator 90 and the rotational axis of the crankshaft 21 are on the same linear line. The crankshaft motor generator 90 is a three-phase generator and is a permanent-magnet generator. The crankshaft motor generator 90 has plural driving states, i.e., a power generation state and a powering state. To be more specific, a driving state in which the crankshaft motor generator 90 applies torque to the crankshaft 21 in a reverse rotational direction of the crankshaft 21 and electric power is generated by absorbing torque transmitted from the crankshaft 21 to the primary sheave 42 is a power generation state. To put it differently, in the power generation state, part of the torque in the positive rotational direction of the crankshaft 21 is applied from the crankshaft 21 to the crankshaft motor generator 90, and the crankshaft motor generator 90 rotates in the same direction as the positive rotational direction of the crankshaft 21. Meanwhile, a driving state in which the crankshaft motor generator 90 applies torque in the positive rotational direction of the crankshaft 21 to the crankshaft 21 by using electric power supplied from a later-described battery 94 so that the crankshaft 21 performs positive rotation is the powering state. The crankshaft motor generator 90 is driven in the powering state when the engine starts. In a normal driving after the start of the engine, the crankshaft motor generator 90 is driven in the powering state or the power generation state.

The crankshaft motor generator 90 includes an inner stator 91 and an outer rotor 92. The outer rotor 92 is attached to the crankshaft 21 to rotate together with the crankshaft 21. The outer rotor 92 is a rotational body provided for increasing the inertia of the crankshaft 21. On the inner circumferential surface of the outer rotor 92, a permanent magnet unit (not illustrated) formed of plural permanent magnets is provided. The inner stator 91 is provided to face the permanent magnet unit of the outer rotor 92.

The crankshaft motor generator 90 includes an inverter 93 and a battery 94. The inverter 93 switches on and off the crankshaft motor generator 90. By a powering function, the battery 94 supplies electric power to the crankshaft motor generator 90 to drive the same. In other words, the battery 94 supplies electric power to the crankshaft motor generator 90 to apply torque in the positive rotational direction of the crankshaft 21. Furthermore, by a regeneration function, the battery 94 stores electric power generated by the crankshaft motor generator 90. In other words, the battery 94 stores electric power generated by the crankshaft motor generator 90, by applying torque to the crankshaft motor generator 90 in the reverse rotational direction of the crankshaft 21. Furthermore, the crankshaft motor generator 90 adjusts an amount of torque in the positive rotational direction or the reverse rotational direction applied to the crankshaft 21, by the switch on and off performed by the inverter 93.

The rubber-belt-type continuously variable transmission device 30 includes a primary shaft portion 41, a primary sheave 42, a secondary shaft 51, a secondary sheave 52, and a rubber belt 32. The primary shaft portion 41 is formed together with the crankshaft 21. In other words, the rotational axis of the primary shaft portion 41 and the rotational axis of the crankshaft 21 are on the same linear line. The primary sheave 42 is provided on the primary shaft portion 41. The primary sheave 42 is arranged to be rotatable together with the primary shaft portion 41. The rubber belt 32 is annular in shape. The rubber belt 32 is wound onto the primary sheave 42 and the secondary sheave 52. The rotation of the primary sheave 42 is transmitted to the secondary sheave 52 through the rubber belt 32. The secondary sheave 52 is provided on the secondary shaft 51. The secondary sheave 52 is arranged to be rotatable together with the secondary shaft 51. The electric actuator 70 is configured to move a later-described primary movable sheave 44 of the primary sheave 42 in the rotational axis direction of the primary shaft portion 41. Furthermore, the electric actuator 70 controls the transmission ratio of the rubber-belt-type continuously variable transmission device 30. The structure of the rubber-belt-type continuously variable transmission device 30 will be detailed later.

As shown in FIG. 4, the secondary sheave 52 is connected to a drive shaft 60 through a clutch 56, the secondary shaft 51, and a main shaft 64. The drive shaft 60 is an axle shaft of the rear wheel 3. The clutch 56 connects and disconnects the secondary sheave 52 to and from the secondary shaft 51. The clutch 56 of the present embodiment is an automatic clutch which is automatically connected and disconnected without needing a clutch operation by the rider. The clutch 56 is a centrifugal clutch. For example, when the engine rotation speed exceeds a predetermined value, the clutch 56 connects the secondary sheave 52 to the secondary shaft 51. The secondary shaft 51 is connected to the main shaft 64 so that power is transmittable. The main shaft 64 is connected to the drive shaft 60 so that power is transmittable. In other words, the power is transmitted from the secondary sheave 52 to the secondary shaft 51, the main shaft 64, and the drive shaft 60. When the engine rotation speed is equal to or lower than the predetermined value, the clutch 56 disconnects the secondary sheave 52 from the secondary shaft 51. In other words, the power is not transmitted from the secondary sheave 52 to the secondary shaft 51, the main shaft 64, and the drive shaft 60.

The following will describe sensors included in the motorcycle 1. As shown in FIG. 4, the motorcycle 1 includes a vehicle speed sensor 3c, an accelerator sensor 4b, a brake sensor 4d, a throttle opening degree sensor 29c, an engine rotation speed sensor 21s, a sheave position detection sensor 85, a secondary sheave rotation speed sensor 51b, and a rotor position detection sensor 90a. These sensors are connected to the ECU 100.

The vehicle speed sensor 3c is provided on the drive shaft 60 of the rear wheel 3. The vehicle speed sensor 3c is configured to output a signal with a frequency corresponding to the rotation speed of the drive shaft 60. A vehicle speed acquisition unit 105 of the ECU 100 is configured to acquire the vehicle speed based on an output signal of the vehicle speed sensor 3c.

The accelerator sensor 4b is configured to detect a rotational angle (hereinafter, accelerator opening degree) of the accelerator grip 4a operated by the rider. The accelerator sensor 4b is, for example, a potentiometer provided in the accelerator grip 4a. The accelerator sensor 4b is configured to output an electric signal corresponding to the accelerator opening degree set by the rider. An accelerator opening degree acquisition unit 101 of the ECU 100 is configured to acquire the accelerator opening degree set by the rider, based on an output signal of the accelerator sensor 4b.

The brake sensor 4d is configured to detect an operation amount (hereinafter, brake operation amount) of the brake lever 4c operated by the rider. The brake sensor 4d is configured to acquire an electric signal corresponding to the brake operation amount set by the rider. A brake operation amount acquisition unit 106 of the ECU is configured to acquire the brake operation amount set by the rider, based on an output signal of the brake sensor 4d.

The throttle opening degree sensor (throttle position sensor) 29c is provided in the throttle body 29. The throttle opening degree sensor 29c detects a throttle opening degree which is an opening degree of the throttle valve 29a. The throttle opening degree sensor 29c is constituted by a potentiometer, for example. The throttle opening degree sensor 29c is configured to output a voltage signal or a current signal corresponding to a throttle opening degree. A throttle opening degree acquisition unit 102 of the ECU 100 is configured to acquire the throttle opening degree based on an output signal of the throttle opening degree sensor 29c.

The engine rotation speed sensor 21s is provided in the engine main body unit 20. The engine rotation speed sensor 21s is configured to output a signal with a frequency corresponding to the rotation speed of the crankshaft 21 and the rotation speed of the primary shaft portion 41. The rotation speed of the crankshaft 21 and the rotation speed of the primary shaft portion 41 are both the engine rotation speed. An engine rotation speed acquisition unit 103 of the ECU 100 is configured to acquire the engine rotation speed with reference to an output signal of the engine rotation speed sensor 21s.

The sheave position detection sensor 85 is provided in the rubber-belt-type continuously variable transmission device 30. The sheave position detection sensor 85 is configured to detect the transmission ratio of the rubber-belt-type continuously variable transmission device 30. The transmission ratio changes in accordance with the groove width of the primary sheave 42. In other words, the transmission ratio corresponds to the position of the primary movable sheave 44 of the primary sheave 42. The sheave position detection sensor 85 is configured to output an electric signal corresponding to the position of the primary movable sheave 44. The sheave position detection sensor 85 is constituted by a revolution counter, for example. A transmission ratio acquisition unit 104 of the ECU 100 is configured to detect the transmission ratio based on an output signal of the sheave position detection sensor 85, the rotation speed of the crankshaft 21 described above, and the rotation speed of the secondary sheave 52 described below.

The secondary sheave rotation speed sensor 51b is provided in the rubber-belt-type continuously variable transmission device 30. The secondary sheave rotation speed sensor 51b is configured to output a signal with a frequency corresponding to the rotation speed of the secondary sheave 52. A vehicle speed acquisition unit 105 of the ECU 100 is configured to acquire the vehicle speed by calculating the rotation speed of the secondary sheave 52 based on an output signal of the secondary sheave rotation speed sensor 51b. Hereinafter, the rotation speed of the secondary sheave 52 will be referred to as secondary sheave rotation speed.

The rotor position detection sensor 90a is provided in the crankshaft motor generator 90. The rotor position detection sensor 90a is configured to detect a rotation position of the outer rotor 92. The rotor position detection sensor 90a is configured to output an electric signal corresponding to the rotation position of the outer rotor 92. A vehicle speed acquisition unit 105 of the ECU 100 is configured to acquire the vehicle speed by calculating the rotation speed and the rotation position of the outer rotor 92 based on an electric signal of the rotor position detection sensor 90a. In this regard, the rotation speed of the outer rotor 92 is identical with the rotation speed of the crankshaft 21. The rotor position detection sensor 90a therefore calculates the rotation speed of the crankshaft 21 based on an output signal of the rotor position detection sensor 90a. Furthermore, an outer rotor position acquisition unit 107 of the ECU 100 is configured to acquire the rotation position of the crankshaft 21 based on an output signal of the rotor position detection sensor 90a.

### [Structure of Rubber-Belt-Type Continuously Variable Transmission Device 30 and Structure of Electric Actuator 70]

The structure of the rubber-belt-type continuously variable transmission device 30 and the structure of the electric actuator 70 will be detailed with reference to FIG. 6.

As described above, the rubber-belt-type continuously variable transmission device 30 includes the rubber belt 32, the primary shaft portion 41, the primary sheave 42, the secondary shaft 51, and the secondary sheave 52. The rubber belt 32, the primary sheave 42, and the secondary sheave 52 are provided in a belt casing 31.

The primary shaft portion 41 is provided at a left end portion in the vehicle left-right direction of the crankshaft 21 and is formed together with the crankshaft 21. In other words, the primary shaft portion 41 is arranged to be coaxial with the crankshaft 21. The primary shaft portion 41 receives power from the crankshaft 21. The primary shaft portion 41 is a portion leftward of the cam chain 28c wound onto the crankshaft 21. The primary shaft portion 41 is shorter in diameter than a part of the crankshaft 21, where the cam chain 28c is wound. The primary shaft portion 41 is arranged such that a left portion in the vehicle left-right direction is shorter in diameter than a right portion. The primary shaft portion 41 penetrates the crankcase member 22.

The primary sheave 42 is attached to the primary shaft portion 41. The primary sheave 42 includes a collar member 43, a primary movable sheave 44, and a primary fixed sheave 45. The primary movable sheave 44 and the primary fixed sheave 45 are two primary sheaves.

At a right end portion of the primary movable sheave 44, a slide member 44a is provided to be integrated with the primary movable sheave 44. In other words, the slide member 44a is connected to the primary movable sheave 44. The slide member 44a is formed to be cylindrical in shape. The primary movable sheave 44 and the slide member 44a are attached to the collar member 43. The primary movable sheave 44 and the slide member 44a are supported by the collar member 43 to be movable in the axial direction of the primary shaft portion 41. The primary movable sheave 44 and the slide member 44a rotate together with the collar member 43 and the primary shaft portion 41. In this way, the primary movable sheave 44 is arranged to be movable in the axial direction of the primary shaft portion 41 together with the slide member 44a, and to be rotatable together with the slide member 44a.

The primary fixed sheave 45 is spline-fitted to the primary shaft portion 41 so that the primary fixed sheave 45 is in contact with a left face of the collar member 43 in the vehicle left-right direction. At a position to the left of the primary fixed sheave 45 in the vehicle left-right direction, a spacer 46 and a locknut 47 are provided at a left end portion of the primary shaft portion 41. As the locknut 47 is fastened, the primary fixed sheave 45 is fixed to the primary shaft portion 41 so as not to be movable in the axial direction. The primary fixed sheave 45 is arranged to rotate together with the primary shaft portion 41. On a left face of the primary fixed sheave 45, cooling fins 45c are radially provided to be integrated with the primary fixed sheave 45. At a front portion of the belt casing 31, an air inflow port (not illustrated) is formed. The primary fixed sheave 45 is rotationally driven by the rotation of the primary shaft portion 41. As the cooling fans 45c are rotated, air is introduced into the belt casing 31 through the air inflow port. The cooling fans 45c introduce the outside air into the belt casing 31. The air introduced into the belt casing 31 makes contact with the rubber belt 32, the primary sheave 42, and the secondary sheave 52. As a result, the rubber belt 32, the primary sheave 42, and the secondary sheave 52 radiate heat. The air introduced into the belt casing 31 is discharged through an air outlet (not illustrated) provided at a rear portion or a lower portion of the belt casing 31.

The secondary shaft 51 is provided parallel to the primary shaft portion 41. A gear case 61 is provided to the right of a rear end portion of the belt casing 31. The gear case 61 is connected to a case main body 62 which is provided to the right of the gear case 61. The secondary shaft 51 penetrates the gear case 61. In an internal space 60a of the gear case 61 and the case main body 62, a drive shaft 60 which rotates the rear wheel 3 is provided. The drive shaft 60 is provided parallel to the secondary shaft 51. In the internal space 60a, the main shaft 64 (see FIG. 3) is provided parallel to the secondary shaft 51 and the drive shaft 60.

The secondary shaft 51 is supported by the gear case 61 via a bearing 61a. A right end portion of the secondary shaft 51 is supported by the case main body 62 via a bearing 62a. A left end portion of the secondary shaft 51 is supported by the belt casing 31 via a bearing 63 and a spacer 63a.

The secondary sheave 52 is attached to the secondary shaft 51. The secondary sheave 52 includes a collar member 53, a secondary movable sheave 54, and a secondary fixed sheave 55. The collar member 53 is formed to be cylindrical in shape. The collar member 53 is rotatably attached to the outer circumferential surface of the secondary shaft 51 via a bearing 55a and a bearing 55b. The collar member 53 is attached to the secondary shaft 51 to be immovable in the axial direction. The slide member 53a is attached to the collar member 53. The slide member 53a is provided between the inner circumferential surface of the secondary movable sheave 54 and the outer circumferential surface of the collar member 53. The slide member 53a and the secondary movable sheave 54 are supported by the collar member 53 to be movable in the rotational axis direction of the secondary shaft 51. Furthermore, the slide member 53a and the secondary movable sheave 54 rotate together with the collar member 53 and the secondary shaft 51. In this way, the secondary movable sheave 54 is movable in the rotational axis direction of the secondary shaft 51 together with the collar member 53 and is attached to the secondary shaft 51 to rotate together with the slide member 53a.

The secondary fixed sheave 55 is fitted with and fixed to the collar member 53. In other words, the secondary fixed sheave 55 is attached to the secondary shaft 51 via the collar member 53 to be rotatable but to be immovable in the rotational axis direction.

A centrifugal clutch 56 is provided leftward of the secondary sheave 52. The centrifugal clutch 56 is attached to the secondary shaft 51. The centrifugal clutch 56 includes a weight arm 56a, a weight 56b, and an outer clutch 56c. The weight arm 56a is fitted with and fixed to the collar member 53 so as to rotate together with the collar member 53. The weight 56b is attached to the weight arm 56a to be swingable in the radial direction of the secondary shaft 51. The outer clutch 56c is provided to surround the weight 56b. The outer clutch 56c is fitted with and fixed to the secondary shaft 51 so as to rotate together with the secondary shaft 51. A spring 57 is provided between the secondary movable sheave 54 and the weight arm 56a. By this spring 57, the secondary movable sheave 54 is biased in a direction in which the groove width of the secondary sheave 52 is reduced and the belt winding diameter of the secondary sheave 52 is increased.

In accordance with the increase in the rotation speed of the secondary sheave 52, the weight 56b moves outward in the radial direction of the secondary shaft 51 due to centrifugal force, and makes contact with the inner surface of the outer clutch 56c. As a result of this, the rotation of the secondary sheave 52 is transmitted to the secondary shaft 51. The rotation of the secondary shaft 51 is then transmitted to the rear wheel 3 via the main shaft 64 and the drive shaft 60.

The rubber belt 32 is wound onto the primary sheave 42 and the secondary sheave 52. The rubber belt 32 is a transmission belt made of rubber. In FIG. 6, full lines indicate the rubber belt 32 at a low position. In FIG. 6, two-dot chain lines indicate the rubber belt 32 at a top position. When the rubber belt 32 is at the top position, the groove width of the primary sheave 42 is narrowest. In other words, when the rubber belt 32 is at the top position, the winding diameter of the rubber belt 32 wound onto the primary sheave 42 is largest and the transmission ratio is smallest. Meanwhile, when the rubber belt 32 is at the low position, the groove width of the primary sheave 42 is widest. In other words, when the rubber belt 32 is at the low position, the winding diameter of the rubber belt 32 wound onto the primary sheave 42 is smallest and the transmission ratio is largest. It is noted that the groove width of the primary sheave 42 indicates the width of the groove 42a formed by the primary movable sheave 44 and the primary fixed sheave 45.

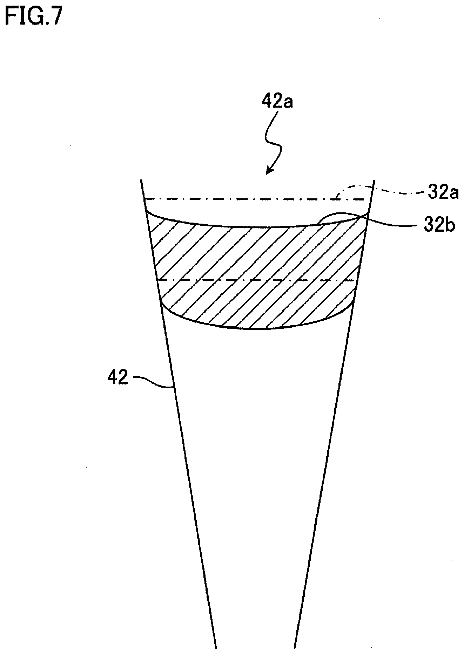

The following will describe a case where the rubber belt 32 is at the top position, with reference to FIG. 7. When the rubber belt 32 is at the top position, the groove width of the primary sheave 42 is narrowest. When the motorcycle 1 is in an acceleration state, the rubber belt 32 is pressurized by the primary movable sheave 44 and the primary fixed sheave 45. For this reason, the rubber belt 32 which is highly flexible is greatly deflected as indicated by the full lines in FIG. 7. When the rubber belt 32 shifts from the top position to the low position, pressure from the primary movable sheave 44 and the primary fixed sheave 45 to the rubber belt 32 is reduced, and hence the deflection of the rubber belt 32 is reduced or eliminated. When the groove width of the primary sheave 42 is unchanged, as shown by one-dot chain lines in FIG. 7, the rubber belt 32 moves toward the outer circumference side of the primary sheave 42, with the result that the winding diameter of the rubber belt 32 on the primary sheave 42 is increased. The transmission ratio is therefore decreased by an amount corresponding to the deflection of the rubber belt 32.

The electric actuator 70 is configured to move the primary movable sheave 44 of the rubber-belt-type continuously variable transmission device 30 in the rotational axis direction of the primary shaft portion 41. The electric actuator 70 includes a relative moving member 73 and a rotating member 74. The rotating member 74 is connected to an unillustrated electric motor and is rotated. The electric motor is controlled by a later-described electric actuator control unit 115. The rotating member 74 is in contact with the relative moving member 73. The relative moving member 73 is fitted to the slide member 44a via a bearing. On account of the rotational force of the rotating member 74, the relative moving member 73 is movable in the rotational axis direction of the primary shaft portion 41, relative to the rotating member 74. As the relative moving member 73 moves in the rotational axis direction of the primary shaft portion 41, the slide member 44a moves in the rotational axis direction of the primary shaft portion 41, too. In other words, on account of the rotational force of the rotating member 74 of the electric actuator 70, the primary movable sheave 44 moves in the rotational axis direction of the primary shaft portion 41. In the rubber-belt-type continuously variable transmission device 30, the electric motor is controlled by the electric actuator control unit 115 and the groove width of the groove 42a of the primary sheave 42 is adjusted. To put it differently, the rubber-belt-type continuously variable transmission device of the specific example is an electronically-controlled continuously variable transmission (ECVT).

### [Power Transmission Path]

A power transmission path of the engine unit 6 will be described with reference to FIG. 4.

As shown in FIG. 4, the power transmission path is a path through which power is transmitted from the crankshaft 21 to the rear wheel 3. The crankshaft 21 is the upstream end of the power transmission path. The rear wheel 3 is the downstream end of the power transmission path. The crankshaft motor generator 90 is directly connected to the crankshaft 21. In other words, the crankshaft motor generator 90 is connected to the crankshaft 21 to be able to transmit power to the crankshaft 21. The rubber-belt-type continuously variable transmission device 30 is connected to the crankshaft 21 to be able to transmit power thereto, by the primary sheave 42 which is attached to the primary shaft portion 41 coaxial with the crankshaft 21. The power of the crankshaft 21 is transmitted to the secondary shaft 51 via the primary sheave 42, the rubber belt 32, and the secondary sheave 52. The secondary shaft 51, the main shaft 64, and the drive shaft 60 are arranged to be able to transmit rotational force by gears. The power of the secondary shaft 51 is then transmitted to the rear wheel 3 via the main shaft 64 and the drive shaft 60. The crankshaft 21, the crankshaft motor generator 90, the rubber-belt-type continuously variable transmission device 30, and the rear wheel 3 are lined up from the upstream to the downstream of the power transmission path in this order.

### [Structure of ECU]

The engine unit 6 includes the ECU 100. The ECU 100 controls the engine unit 6. As shown in FIG. 3, the ECU 100 is connected to sensors such as the vehicle speed sensor 3c, the accelerator sensor 4b, the throttle opening degree sensor 29c, the engine rotation speed sensor 21s, the sheave position detection sensor 85, and the secondary sheave rotation speed sensor 51b. Furthermore, the ECU 100 is connected to members such as the ignition plug 24b, the injector 27, the throttle actuator 29b, the electric actuator 70, the crankshaft motor generator 90, and the display device 110.

The ECU 100 is constituted of a CPU, a ROM, a RAM, etc. The CPU is configured to perform information processing based on a program and data stored in a storage unit such as the ROM and the RAM. With this arrangement, the ECU 100 realizes each function of function processors. As shown in FIG. 3, as the function processors, the ECU 100 includes an accelerator opening degree acquisition unit 101, a throttle opening degree acquisition unit 102, an engine rotation speed acquisition unit 103, a transmission ratio acquisition unit 104, a vehicle speed acquisition unit 105, a brake operation amount acquisition unit 106, an outer rotor position acquisition unit 107, a combustion control unit 111, a throttle control unit 112, a rear wheel drive control unit 113, a crankshaft motor generator control unit 114, an electric actuator control unit 115, and a braking force level determination unit 116. The rear wheel drive control unit 113 is connected to the crankshaft motor generator control unit 114 and the electric actuator control unit 115. The rear wheel braking force controller 120 of the present invention is constituted by the rear wheel drive control unit 113, crankshaft motor generator control unit 114, the electric actuator control unit 115, the braking force level determination unit 116, the electric actuator 70, and the crankshaft motor generator 90.

The accelerator opening degree acquisition unit 101 is configured to acquire the accelerator opening degree set by the rider, based on an output signal detected by the accelerator sensor 4b. The throttle opening degree acquisition unit 102 is configured to acquire the throttle opening degree based on an output signal detected by the throttle opening degree sensor 29c. The engine rotation speed acquisition unit 103 is configured to acquire the engine rotation speed based on an output signal detected by the engine rotation speed sensor 21s. The transmission ratio acquisition unit 104 is configured to acquire the transmission ratio based on an output signal detected by the sheave position detection sensor 85 or an output signal detected by each of the engine rotation speed sensor 21s and the secondary sheave rotation speed sensor 51b. The vehicle speed acquisition unit 105 is configured to acquire the vehicle speed based on an output signal detected by the vehicle speed sensor 3c, the secondary sheave rotation speed sensor 51b, or the rotor position detection sensor 90a. The outer rotor position acquisition unit 107 is configured to acquire the outer rotor position based on an output signal detected by the rotor position detection sensor 90a.

The combustion control unit 111 executes a program stored in a storage unit such as the ROM to control combustion in the engine main body unit 20. The combustion control unit 111 controls an ignition timing of the ignition plug 24b. The combustion control unit 111 controls the combustion in the engine main body unit 20 by causing the ignition plug 24b to perform spark discharge ignition. Furthermore, the combustion control unit 111 controls the combustion in the engine main body unit 20 by controlling a fuel supply amount by controlling the injector 27 and the fuel pump.

For example, the combustion control unit 111 controls the injector 27, the fuel pump, and the ignition timing of the ignition plug 24b based on various sets of information in addition to the engine rotation speed and the throttle opening degree. The engine rotation speed is acquired by the engine rotation speed acquisition unit 103. The throttle opening degree is acquired by the throttle opening degree acquisition unit 102. The sets of information are calculated based on output signals from sensors such as an engine temperature sensor and an oxygen sensor. The combustion control unit 111 is feedback-controlled so that an output signal of the oxygen sensor detecting the oxygen density in exhaust gas is maintained at a target value.

The throttle control unit 112 controls the throttle opening degree based on an operation of the accelerator by the rider. In other words, the throttle control unit 112 detects an accelerator opening degree which indicates an operation amount of the accelerator grip 4a by the rider, based on an output signal of the accelerator sensor 4b. The throttle control unit 112 then controls a throttle opening degree by activating the throttle actuator 29b in accordance with the accelerator opening degree. In other words, the throttle control unit 112 supplies driving power to the throttle actuator 29b and drives the throttle actuator 29b.

For example, the throttle control unit 112 performs feedback control of the throttle opening degree with reference to a throttle map, a relational expression, etc., in which an accelerator opening degree is associated with a throttle opening degree. In other words, the throttle control unit 112 calculates a target throttle opening degree corresponding to the accelerator opening degree, with reference to the throttle map, etc. Based on a difference between the throttle opening degree and the target throttle opening degree, the throttle control unit 112 activates the throttle actuator 29b so that the a throttle opening degree acquired by the throttle opening degree acquisition unit 102, which indicates the actual throttle opening degree, to be matched with the target throttle opening degree. The throttle map, etc. in which an accelerator opening degree is associated with a throttle opening degree is stored in the storage unit in advance.

The rear wheel drive control unit 113 executes a program stored in the storage unit to control the driving force and the braking force applied to the rear wheel 3, based on a result of determination of the level of the braking force, which has been determined by the braking force level determination unit 116. The braking force level determination unit 116 determines whether the braking force applied to the rear wheel 3 by the engine braking is large or small, based on a predetermined braking force level condition. Based on the accelerator operation degree and the brake operation amount set by the rider and acquired by the accelerator opening degree acquisition unit 101 and the brake operation amount acquisition unit 106, the rear wheel drive control unit 113 outputs a control command to the crankshaft motor generator control unit 114, a control command to the electric actuator control unit 115, and a control command to a front wheel brake driving unit and a rear wheel brake driving unit which are not illustrated. Furthermore, based on the accelerator operation degree and the brake operation amount set by the rider and acquired by the accelerator opening degree acquisition unit 101 and the brake operation amount acquisition unit 106, the rear wheel drive control unit 113 determines whether the motorcycle 1 is in an acceleration state or in a deceleration state. The crankshaft motor generator control unit 114 controls electric power supply to the crankshaft motor generator 90. To be more specific, the inverter 93 of the crankshaft motor generator 90 is controlled to switch on/off. With this, the crankshaft motor generator control unit 114 changes the torque applied to the crankshaft 21 and absorbed from the crankshaft 21, so as to control the regeneration function and the powering function. The electric actuator control unit 115 activates the electric actuator 70 to control the movement of the primary movable sheave 44 of the primary sheave 42. Furthermore, the electric actuator control unit 115 controls the transmission ratio of the rubber-belt-type continuously variable transmission device 30. The front wheel brake driving unit and the rear wheel brake driving unit control the rotation and braking of the front wheel 2 and the rear wheel 3.

When, for example, the motorcycle 1 is in a start state or an acceleration state, the rear wheel drive control unit 113 outputs a control command to the crankshaft motor generator control unit 114 to drive the crankshaft motor generator 90 in the powering state. The crankshaft motor generator control unit 114 then controls the crankshaft motor generator 90 to apply, to the crankshaft 21, torque in the positive rotational direction of the crankshaft 21. In other words, by the power supplied from the battery 94, the crankshaft motor generator control unit 114 controls the crankshaft motor generator 90 to rotate in the positive rotational direction of the crankshaft 21. As a result, the crankshaft 21 is assisted by the crankshaft motor generator 90 to rotate in the positive rotational direction. For example, after the motorcycle 1 reaches the maximum speed and then shifts to the deceleration state, the rear wheel drive control unit 113 outputs a control command to the crankshaft motor generator control unit 114 to drive the crankshaft motor generator 90 in the power generation state. The crankshaft motor generator control unit 114 then controls the crankshaft motor generator 90 to apply, to the crankshaft 21, torque in the reverse rotational direction of the crankshaft 21. In other words, the crankshaft motor generator control unit 114 rotates the crankshaft motor generator 90 in the reverse rotational direction of the crankshaft 21 to cause the crankshaft motor generator 90 to absorb the torque transmitted from the crankshaft 21 to the primary sheave 42. As a result, the crankshaft 21 is loaded in the reverse rotational direction by the crankshaft motor generator 90. The torque of the crankshaft 21 absorbed by the crankshaft motor generator 90 is stored as electric power in the battery 94. As described above, the crankshaft motor generator 90 is able to adjust the engine rotation speed by applying torque in the positive rotational direction or the reverse rotational direction to the crankshaft 21. To be more specific, after the motorcycle 1 reaches the maximum speed and then shifts to the deceleration state, the crankshaft motor generator 90 is controlled to increase the torque absorbed from the crankshaft 21. With this arrangement, the amount of decrease of the engine rotation speed is increased. As a result, the engine braking is enhanced. Meanwhile, when the crankshaft motor generator 90 is controlled to decrease or eliminate the torque absorbing from the crankshaft 21, the amount of decrease of the engine rotation speed is decreased or eliminated. As a result, the engine braking is decreased.

The braking force level determination unit 116 determines whether the braking force applied to the rear wheel 3 by the engine braking is large or small, based on a predetermined small braking force condition. When it is determined that the small braking force condition is satisfied, the braking force level determination unit 116 outputs a small braking force signal which causes the braking force applied to the rear wheel 3 by the engine braking to be small as compared to a case where it is determined that the small braking force condition is not satisfied. The small braking force condition is a condition in which the running state of the motorcycle 1 corresponds to, for example, at least one of the following cases: the motorcycle 1 runs down a slope having an inclination angle equal to or smaller than a gradual slope angle; at least two riders ride on the motorcycle 1; the motorcycle 1 runs on a congested road; or the motorcycle 1 runs on a road in an urban area or a residential area. The gradual slope angle indicates an inclination angle of a slope inclined with respect to a horizontal plane. For example, when a small motorcycle having two riders thereon runs at a speed of 30 to 50 kilometers per hour with the throttle opening degree being in a full-closed state, the gradual slope angle is 1 degree with respect to the horizontal plane.

The rear wheel drive control unit 113 outputs a control command to the electric actuator control unit 115 so as to control the transmission ratio of the rubber-belt-type continuously variable transmission device 30. To be more specific, the rear wheel drive control unit 113 outputs a control command to the electric actuator control unit 115 with reference to a transmission ratio map in which a throttle opening degree, an engine rotation speed, an engine rotation speed, vehicle speed, and a transmission ratio are associated. Based on a result of determination input from the braking force level determination unit 116, the rear wheel drive control unit 113 selects a transmission ratio map used for the control from plural transmission ratio maps. The rear wheel drive control unit 113 then calculates a target transmission ratio of the rubber-belt-type continuously variable transmission device 30, based on various sets of data including the transmission ratio map, the throttle opening degree acquired by the throttle opening degree acquisition unit 102, the engine rotation speed acquired by the engine rotation speed acquisition unit 103, and the vehicle speed acquired by the vehicle speed acquisition unit 105. The electric actuator control unit 115 then controls the electric motor to change the transmission ratio of the rubber-belt-type continuously variable transmission device 30. The rear wheel drive control unit 113 changes the transmission ratio based on a deviation between the currently-set transmission ratio acquired by the transmission ratio acquisition unit 104 and the target transmission ratio calculated based on the transmission ratio map. The electric actuator control unit 115 changes the transmission ratio by supplying driving power to the electric motor of the rubber-belt-type continuously variable transmission device 30 and activating the electric motor.

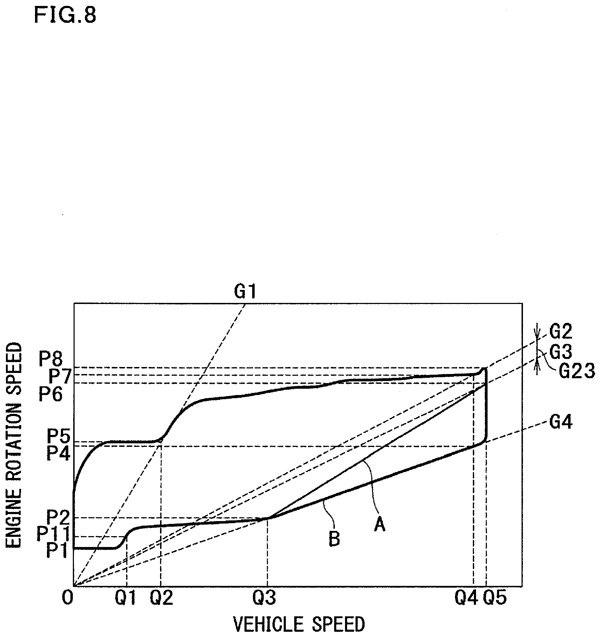

FIG. 8 shows specific examples of a transmission ratio map in which a throttle opening degree, an engine rotation speed, vehicle speed, and a transmission ratio are associated. FIG. 8 shows a transmission ratio map A and a transmission ratio map B. The transmission ratio map A is a transmission ratio map which is used when it is determined by the braking force level determination unit 116 that the small braking force condition is not satisfied. The transmission ratio map B is a transmission ratio map which is used when it is determined by the braking force level determination unit 116 that the small braking force condition is satisfied. Each of the transmission ratio maps shown in FIG. 8 is a transmission ratio map in which an engine rotation speed and a vehicle speed are associated with a transmission ratio. The engine rotation speed, the vehicle speed, and the transmission ratio are measured when the throttle opening degree is fully opened until the vehicle reaches the maximum speed and then the throttle opening degree is fully closed after the vehicle reaches the maximum speed. When the throttle opening degree is not fully opened, a transmission ratio map different from those in FIG. 8 is used. The engine rotation speed shown in FIG. 8 is target engine rotation speed. The vehicle speed shown in FIG. 8 is vehicle speed acquired by the vehicle speed acquisition unit 105.

As shown in FIG. 8, each of the transmission ratio map A and the transmission ratio map B is arranged such that, as the motorcycle 1 accelerates and the vehicle speed increases from 0 to Q2, the engine rotation speed increases from idling rotation speed P1 to clutch stall rotation speed P5 and the highest transmission ratio G1 is set. As the engine rotation speed increases from P5 to P7 and the vehicle speed increases from Q2 to Q4, the transmission ratio gradually decreases from G1 to G2. When the engine rotation speed of the motorcycle 1 increases from P7 to P8 while the transmission ratio remains at G2 and hence the driving force of the rear wheel 3 becomes balanced with the running load, the vehicle speed reaches the maximum speed Q5 which is the highest vehicle speed. The transmission ratio at the maximum speed Q5 is termed a maximum speed transmission ratio. Until the motorcycle 1 accelerates from the vehicle speed 0 and reaches the maximum speed Q5, the transmission ratio map A is identical with the transmission ratio map B. To be more specific, when the motorcycle 1 starts and accelerates, the rear wheel drive control unit 113 outputs a control command instructing pressure increase to the electric actuator control unit 115. In response to this, the groove width of the primary sheave 42 of the rubber-belt-type continuously variable transmission device 30 is gradually narrowed from the maximum width. The winding diameter of the rubber belt 32 of the rubber-belt-type continuously variable transmission device 30 on the primary sheave 42 gradually increases. In accordance with the increase of the engine rotation speed, the vehicle speed gradually increases.

During part of a period from the shift from the maximum speed Q5 to the deceleration state of the motorcycle 1 to the stop of the motorcycle 1, the transmission ratio map A is different from the transmission ratio map B. In the transmission ratio map B, the transmission ratio is at a later-described minimum transmission ratio G4 for a longer time than in the transmission ratio map A. In the motorcycle 1, the smaller the transmission ratio of the rubber-belt-type continuously variable transmission device 30 is, the smaller the engine braking is. As a result, the engine braking in the transmission ratio map B is smaller than the engine braking in the transmission ratio map A.

To be more specific, in the transmission ratio map A, when the motorcycle 1 shifts from the maximum speed Q5 to the deceleration state, to begin with, the engine rotation speed decreases from P8 to P6 and the transmission ratio is changed to a transmission ratio G3 which is smaller than the maximum speed transmission ratio G2 by a rubber belt change amount G23, while the vehicle speed remains at the maximum speed Q5. The rubber belt change amount G23 is an amount of change of the transmission ratio due to deflection of the rubber belt 32, from the maximum speed transmission ratio G2. After the shift to the deceleration state, the deflection of the rubber belt 32 of the rubber-belt-type continuously variable transmission device 30 is decreased or eliminated, and the winding diameter of the rubber belt 32 of the rubber-belt-type continuously variable transmission device 30 on the primary sheave 42 is further increased. The engine rotation speed decreases from P8 to P6 but the vehicle speed remains at the maximum speed Q5. Thereafter, as the engine rotation speed decreases from P6 to P2 and the vehicle speed decreases from Q5 to Q3, the transmission ratio is decreased from G3 to G4 which is the minimum transmission ratio. To be more specific, the rear wheel drive control unit 113 outputs a control command of narrowing the groove width of the primary sheave 42, to the electric actuator 70. In response to this, the groove width of the primary sheave 42 of the rubber-belt-type continuously variable transmission device 30 is gradually narrowed. The winding diameter of the rubber belt 32 of the rubber-belt-type continuously variable transmission device 30 on the primary sheave 42 gradually increases. At this stage, the engine rotation speed decreases from P6 to P2 and the vehicle speed gradually decreases from Q5 to Q3. Thereafter, as the engine rotation speed decreases from P2 to P11 and the vehicle speed decreases from Q3 to Q1, the transmission ratio gradually increases from G4. To be more specific, the rear wheel drive control unit 113 outputs a control command of widening the groove width of the primary sheave 42, to the electric actuator 70. In response to this, the groove width of the primary sheave 42 of the rubber-belt-type continuously variable transmission device 30 is gradually widened. The winding diameter of the rubber belt 32 of the rubber-belt-type continuously variable transmission device 30 on the primary sheave 42 gradually decreases. At this stage, the engine rotation speed decreases from P2 to P11 and the vehicle speed gradually decreases from Q3 to Q1. Thereafter, the weight 56b becomes no longer in contact with the outer clutch 56c in the centrifugal clutch 56 when the vehicle speed is Q1, and the engine rotation speed is changed from P11 to P1. Then the vehicle speed is changed from Q1 to 0 while the engine rotation speed remains at P1.

In the transmission ratio map B, when the motorcycle 1 shifts from the maximum speed Q5 to the deceleration state, to begin with, the engine rotation speed decreases from P8 to P4 and the transmission ratio is changed from the maximum speed transmission ratio G2 to the minimum transmission ratio G4, while the vehicle speed remains at the maximum speed Q5. The difference between the maximum speed transmission ratio G2 and the minimum transmission ratio G4 is larger than the rubber belt change amount G23. To be more specific, after the shift to the deceleration state, the deflection of the rubber belt 32 of the rubber-belt-type continuously variable transmission device 30 is decreased or is eliminated. At the same time, the rear wheel drive control unit 113 outputs a control command of narrowing the groove width of the primary sheave 42, to the electric actuator 70. In response to this, the groove width of the primary sheave 42 of the rubber-belt-type continuously variable transmission device 30 is narrowed. The winding diameter of the rubber belt 32 of the rubber-belt-type continuously variable transmission device 30 on the primary sheave 42 increases. At this stage, the engine rotation speed decreases from P8 to P4 while the vehicle speed is almost maintained at Q5. Thereafter, while the engine rotation speed decreases from P4 to P2 and the vehicle speed decreases from Q5 to Q3, the transmission ratio is maintained at the minimum transmission ratio G4. To be more specific, the rear wheel drive control unit 113 outputs a control command of maintaining the sheave position to the electric actuator 70. The groove width of the primary sheave 42 of the rubber-belt-type continuously variable transmission device 30 is therefore unchanged. The winding diameter of the rubber belt 32 of the rubber-belt-type continuously variable transmission device 30 on the primary sheave 42 is also unchanged. At this stage, the engine rotation speed decreases from P4 to P2 and the vehicle speed gradually decreases from Q5 to Q3. Thereafter, as the engine rotation speed decreases from P2 to P11 and the vehicle speed decreases from Q3 to Q1, the transmission ratio gradually increases from G4. To be more specific, the rear wheel drive control unit 113 outputs a control command of widening the groove width of the primary sheave 42 to the electric actuator 70. In response to this, the groove width of the primary sheave 42 of the rubber-belt-type continuously variable transmission device 30 is gradually widened. The winding diameter of the rubber belt 32 of the rubber-belt-type continuously variable transmission device 30 on the primary sheave 42 gradually decreases. At this stage, the engine rotation speed decreases from P2 to P11 and the vehicle speed gradually decreases from Q3 to Q1. Thereafter, the weight 56b becomes no longer in contact with the outer clutch 56c in the centrifugal clutch 56 when the vehicle speed is Q1, and the engine rotation speed is changed from P11 to P1. Then the vehicle speed is changed from Q1 to 0 while the engine rotation speed remains at P1.

Because the motorcycle 1 of the specific example is arranged as described above, the following effects are exerted in addition to the effects of the leaning vehicle 1 of the embodiment described above.

At least after the motorcycle 1 shifts to the deceleration state, the electric actuator 70 included in the rear wheel braking force controller 120 adjusts an amount of increase of the winding diameter of the rubber belt 32 on the primary sheave 42. Then the rubber-belt-type continuously variable transmission device 30 is controlled to have a transmission ratio which is between the maximum speed transmission ratio G2 and the minimum transmission ratio G4. With this, the electric actuator 70 is able to control the magnitude of the braking force applied to the rear wheel 3 by the engine braking. On this account, in the motorcycle 1 on which the rubber-belt-type continuously variable transmission device 30 is mounted, it is possible to further increase the degree of freedom in controlling the braking force applied to the rear wheel 3 by the engine braking controlled by the rear wheel braking force controller 120.

At least after the motorcycle 1 shifts to the deceleration state, the rubber-belt-type continuously variable transmission device 30 adjusts the difference between the maximum speed transmission ratio G2 and the minimum transmission ratio G4 to be larger than the rubber belt change amount G23. As a result, the braking force applied to the rear wheel 3 by the engine braking is decreased. In this regard, at least after the motorcycle 1 shifts to the deceleration state, the crankshaft motor generator 90 included in the rear wheel braking force controller 120 increases an amount of increase of the torque absorbed from the crankshaft 21. With this arrangement, the braking force applied to the rear wheel by the engine braking is increased. In this way, the crankshaft motor generator 90 is able to control the magnitude of the braking force applied to the rear wheel 3 by the engine braking. On this account, in the motorcycle 1 on which the rubber-belt-type continuously variable transmission device 30 is mounted, it is possible to further increase the degree of freedom in controlling the braking force applied to the rear wheel 3 by the engine braking controlled by the rear wheel braking force controller.

In the motorcycle 1 on which the rubber-belt-type continuously variable transmission device 30 is mounted, in some cases the rider of the motorcycle 1 feels comfortable in a running state in which the braking force applied to the rear wheel 3 by the engine braking is small. Meanwhile, in the motorcycle 1 on which the rubber-belt-type continuously variable transmission device 30 is mounted, in other cases the rider of the motorcycle 1 feels comfortable in a running state in which the braking force applied to the rear wheel 3 by the engine braking is large. In consideration of these cases, the rear wheel braking force controller 120 changes the control of the braking force applied to at least one rear wheel 3, in accordance with the running state of the motorcycle 1. On this account, in the motorcycle 1 on which the rubber-belt-type continuously variable transmission device 30 is mounted, it is possible to further increase the degree of freedom in controlling the braking force applied to the rear wheel 3 by the engine braking.

In the motorcycle 1 on which the rubber-belt-type continuously variable transmission device 30 is mounted, a running state in which the rider feels comfortable when the braking force applied to the rear wheel 3 by the engine braking is small is set as the small braking force condition. When the small braking force condition is satisfied, the rear wheel braking force controller 120 is able to apply, to the rear wheel 3, braking force which is smaller than braking force when the small braking force condition is not satisfied. On this account, in the motorcycle 1 on which the rubber-belt-type continuously variable transmission device 30 is mounted, it is possible to further increase the degree of freedom in controlling the braking force applied to the rear wheel 3 by the engine braking.

### (Modifications)

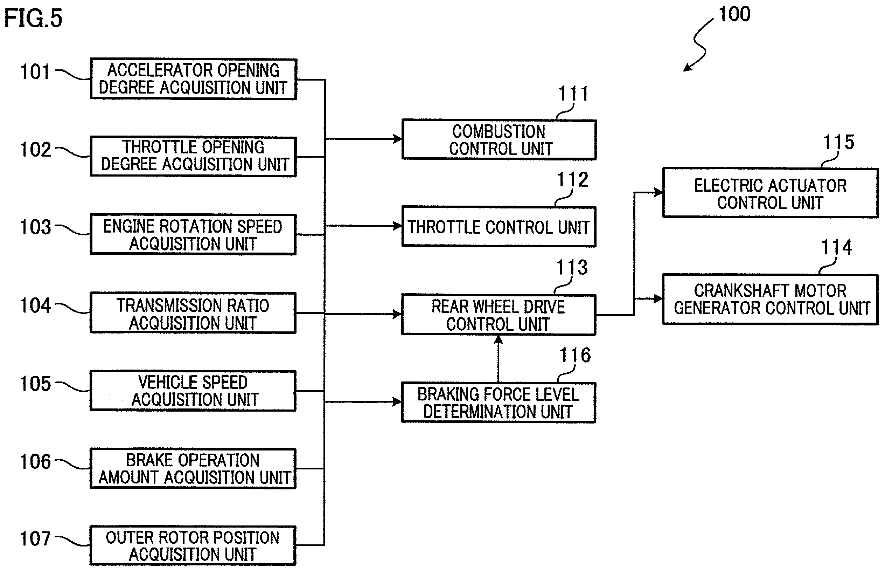

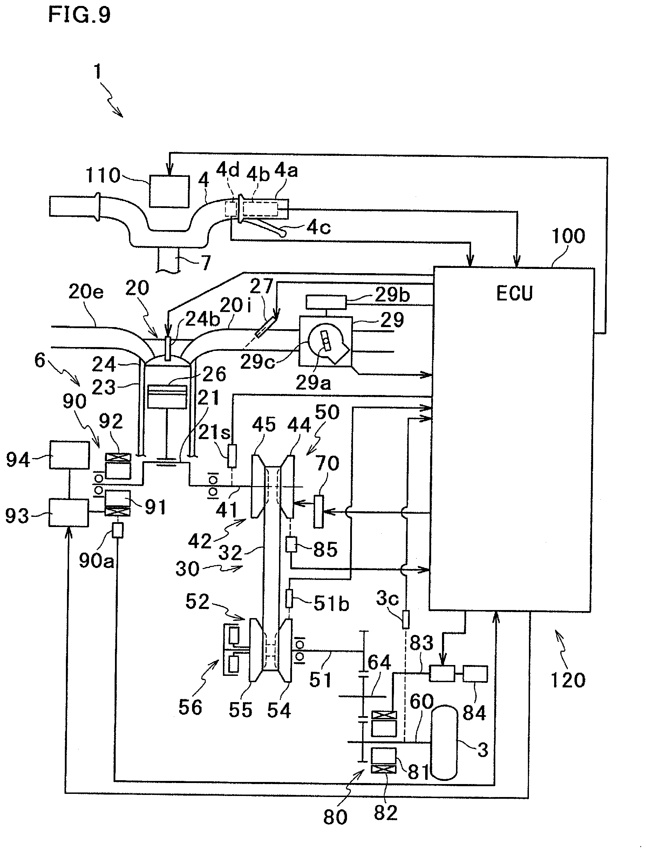

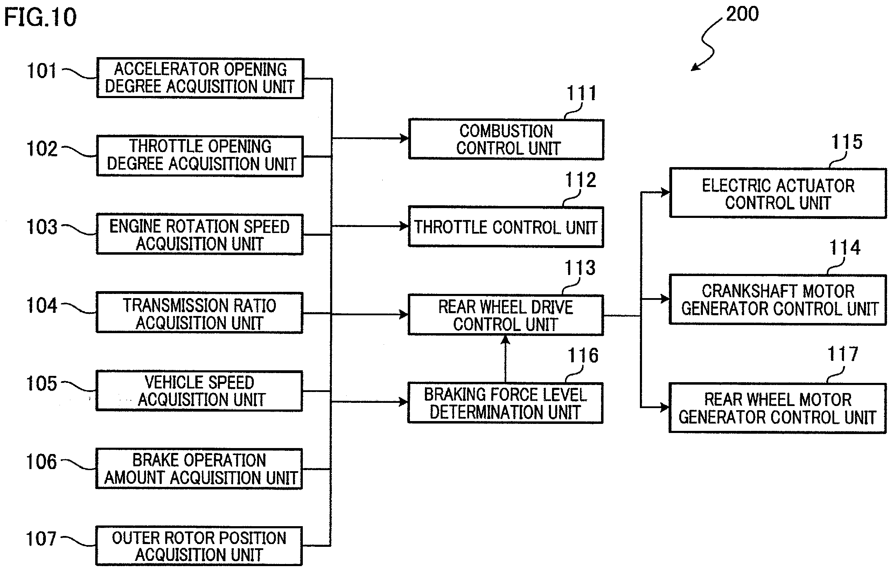

The following will describe modifications of the specific example described above, with reference to FIG. 9 and FIG. 10. In the motorcycle 1 of the specific example above, the rear wheel braking force controller 120 includes the electric actuator 70 and the crankshaft motor generator 90. The invention, however, is not limited to this arrangement. As shown in FIG. 9, a motorcycle 201 of a modification of the specific example above is arranged such that a rear wheel braking force controller 220 includes a rear wheel motor generator 80 in addition to the specific example shown in FIG. 4. In other words, the motorcycle 201 of the modification includes all of the electric actuator, the crankshaft motor generator, and the rear wheel motor generator. Furthermore, as shown in FIG. 10, an ECU 100 includes a rear wheel motor generator control unit 117 in addition to the arrangement of the specific example shown in FIG. 5.

As shown in FIG. 9, the rear wheel braking force controller 220 of the modification further includes the rear wheel motor generator 80. The rear wheel motor generator 80 is connected to a drive shaft 60 which is an axle shaft of a rear wheel 3. In other words, the drive shaft 60 and the rear wheel motor generator 80 are provided to be coaxial. In this connection, when the rear wheel motor generator 80 and the drive shaft 60 are coaxial, the rotational axis of the rear wheel motor generator 80 and the rotational axis of the drive shaft 60 are on the same linear line. The rear wheel motor generator 80 is a three-phase generator and is a permanent-magnet generator. The rear wheel motor generator 80 has plural driving states, i.e., a power generation state and a powering state. To be more specific, a driving state in which the rear wheel motor generator 80 applies torque to the drive shaft 60 of the rear wheel 3 in a reverse rotational direction and generates electric power by absorbing torque from the drive shaft 60 is a power generation state. To put it differently, in the power generation state, part of the torque in the positive rotational direction of the rear wheel 3 is applied from the drive shaft 60 to the rear wheel motor generator 80, and the rear wheel motor generator 80 rotates in the same direction as the positive rotational direction of the rear wheel 3. Meanwhile, a driving state in which the rear wheel motor generator 80 applies torque in the positive rotational direction of the rear wheel 3 to the drive shaft 60 by using electric power supplied from a later-described battery 84 so that the rear wheel 3 performs positive rotation is the powering state. In a normal driving after the start of the engine, the rear wheel motor generator 80 is driven in the powering state or in the power generation state.

The rear wheel motor generator 80 includes an inner stator 81 and an outer rotor 82. The outer rotor 82 is attached to the drive shaft 60 to rotate together with the drive shaft 60. The outer rotor 82 is a rotational body provided for increasing the inertia of the drive shaft 60. On the inner circumferential surface of the outer rotor 82, a permanent magnet unit (not illustrated) formed of plural permanent magnets is provided. The inner stator 81 is provided to face the permanent magnet unit of the outer rotor 82.

The rear wheel motor generator 80 includes an inverter 83 and a battery 84. The battery 84 may serve as the battery 94 of the crankshaft motor generator 90, too. The rear wheel motor generator 80 has plural driving states, i.e., a power generation state and a powering state. To be more specific, a driving state in which the rear wheel motor generator 80 applies torque to the rear wheel 3 in a reverse rotational direction and generates electric power by absorbing torque from the rear wheel 3 is a power generation state. To put it differently, in the power generation state, part of the torque in the positive rotational direction of the rear wheel 3 is applied from the rear wheel 3 to the rear wheel motor generator 80, and the rear wheel motor generator 80 rotates in the same direction as the positive rotational direction of the rear wheel 3. Meanwhile, a driving state in which the rear wheel motor generator 80 applies torque in the positive rotational direction to the rear wheel 3 by using electric power supplied from the battery 84 so that the rear wheel 3 performs positive rotation is the powering state. Furthermore, the rear wheel motor generator 80 adjusts an amount of torque in the positive rotational direction or the reverse rotational direction applied to the rear wheel 3, by switch on/off performed by the inverter 83.

As shown in FIG. 10, the rear wheel motor generator control unit 117 controls electric power supply to the rear wheel motor generator 80. To be more specific, the inverter 83 of the rear wheel motor generator 80 is controlled to switch on/off. With this, the rear wheel motor generator control unit 117 changes the torque applied to the rear wheel 3 and absorbed from the rear wheel 3, so as to control the regeneration function and the powering function.

When, for example, the motorcycle 1 is in a start state or an acceleration state, the rear wheel drive control unit 113 outputs a control command to the rear wheel motor generator control unit 117 to drive the rear wheel motor generator 80 in the powering state. The rear wheel motor generator control unit 117 then controls the rear wheel motor generator 80 to apply torque in the positive rotational direction to the rear wheel 3. In other words, the rear wheel motor generator control unit 117 controls the rear wheel 3 to rotate in the positive rotational direction by electric power supplied from a battery. As a result, the rear wheel 3 is assisted by the rear wheel motor generator 80 to rotate in the positive rotational direction. For example, when the motorcycle 1 is in a deceleration state, the rear wheel drive control unit 113 outputs a control command to the rear wheel motor generator control unit 117 to drive the rear wheel motor generator 80 in the power generation state. The rear wheel motor generator control unit 117 then controls the rear wheel motor generator 80 to apply torque in the reverse rotational direction to the rear wheel 3. In other words, the rear wheel motor generator control unit 117 rotates the rear wheel 3 in the reverse rotational direction by the rear wheel motor generator 80 so that the rear wheel motor generator 80 absorbs the torque of the rear wheel 3. As a result, the rear wheel 3 is loaded in the reverse rotational direction by the rear wheel motor generator 80. The torque of the rear wheel 3 absorbed by the rear wheel motor generator 80 is stored as electric power in the battery. As described above, the rear wheel motor generator 80 is able to adjust the vehicle speed by applying torque in the positive rotational direction or in the reverse rotational direction to the rear wheel 3. To be more specific, after the motorcycle 1 reaches the maximum speed and then shifts to the deceleration state, the rubber-belt-type continuously variable transmission device 30 is controlled to have the minimum transmission ratio which is different from the maximum speed transmission ratio by an amount larger than the rubber belt change amount. As a result, the braking force applied to the rear wheel 3 by the engine braking is decreased. Meanwhile, when the rear wheel motor generator 80 is controlled so that the torque absorbed from the rear wheel 3 increases, the amount of decrease of the vehicle speed from the maximum speed is increased. As a result, the braking force applied to the rear wheel 3 by the engine braking is increased. Meanwhile, when the rear wheel motor generator 80 is controlled to decrease or eliminate the torque absorbed from the rear wheel 3, the amount of decrease of the vehicle speed from the maximum speed is decreased or eliminated. As a result, the braking force applied to the rear wheel 3 by the engine braking is decreased.

Because the motorcycle 1 of the modification is arranged as described above, the following effects are exerted in addition to the effects of the leaning vehicle 1 of the embodiment described above and the effects of the motorcycle 1 of the specific example.

At least after the motorcycle 1 shifts to the deceleration state, in addition to the electric actuator 70 and the crankshaft motor generator 90, the rear wheel motor generator 80 included in the rear wheel braking force controller 120 increases an amount of increase of the torque absorbed from the rear wheel 3. With this arrangement, the braking force applied to the rear wheel 3 by the engine braking is further increased. In this way, the rear wheel motor generator 80 is able to control the magnitude of the braking force applied to the rear wheel 3 by the engine braking. On this account, in the motorcycle 1 on which the rubber-belt-type continuously variable transmission device 30 is mounted, it is possible to further increase the degree of freedom in controlling the braking force applied to the rear wheel 3 by the engine braking.

The preferred embodiment of the present invention has been described above. However, the present invention is not limited to the above-described embodiment, and various changes can be made within the scope of the claims.

In the specific example of the embodiment above, the rear wheel braking force controller 120 is arranged such that the braking force level determination unit 116 determines whether the braking force applied to the rear wheel 3 by the engine braking is large or small, based on a predetermined small braking force condition. In this regard, in the rear wheel braking force controller 120 of the present invention, when it is determined that a large braking force condition is satisfied, the braking force level determination unit 116 may output a large braking force signal which causes the braking force applied to the rear wheel 3 by the engine braking to be large as compared to a case where it is determined that the large braking force condition is not satisfied. The large braking force condition is a condition in which the running state of the motorcycle 1 corresponds to, for example, at least one of the following cases: the motorcycle 1 overtakes a vehicle running in front of the motorcycle 1 in the vehicle front-rear direction; the motorcycle 1 runs down a slope having a larger inclination angle than the gradual slope angle; a luggage is mounted on the motorcycle 1; the distance in the vehicle front-rear direction between the motorcycle 1 and a vehicle running in front of the motorcycle 1 in the vehicle front-rear direction is short; or a signal in front of the motorcycle 1 in the vehicle front-rear direction indicates stop. For example, the rear wheel braking force controller 120 uses the transmission ratio map A when the large braking force condition is satisfied, and uses the transmission ratio map B when the large braking force condition is not satisfied. In this arrangement, in the motorcycle 1 on which the rubber-belt-type continuously variable transmission device 30 is mounted, a running state in which the rider feels comfortable when the braking force applied to the rear wheel by the engine braking is large is set as the large braking force condition. When the large braking force condition is satisfied, the rear wheel braking force controller is able to apply, to the rear wheel, braking force which is larger than braking force when the large braking force condition is not satisfied. In the leaning vehicle on which the rubber-belt-type continuously variable transmission device is mounted, it is therefore possible to further increase the degree of freedom in controlling the braking force applied to the rear wheel by the engine braking.

In the specific example of the embodiment above, the rear wheel braking force controller 120 is arranged such that the braking force level determination unit 116 determines whether the braking force applied to the rear wheel 3 by the engine braking is large or small, based on a predetermined small braking force condition. In the leaning vehicle of the present invention, the rear wheel braking force controller may be arranged such that the braking force level determination unit determines whether the braking force applied to the rear wheel by the engine braking is large or small, based on a predetermined small braking force condition and a predetermined large braking force condition. In this case, when the braking force level determination unit determines that the small braking force condition is satisfied, the rear wheel braking force controller outputs a small braking force control signal which causes the braking force applied to the rear wheel by the engine braking to be small as compared to a case where the small braking force condition is not satisfied. Meanwhile, when the braking force level determination unit determines that the large braking force condition is satisfied, the rear wheel braking force controller outputs a large braking force signal which causes the braking force applied to the rear wheel by the engine braking to be large as compared to a case where the large braking force condition is not satisfied. For example, the rear wheel braking force controller uses a transmission ratio map when the large braking force condition is satisfied, a transmission ratio map when the small braking force condition is satisfied, or a transmission ratio map when neither the large braking force condition nor the small braking force condition is satisfied.

In the specific example of the embodiment above, the rear wheel braking force controller 120 includes the braking force level determination unit 116. The invention, however, is not limited to this arrangement. In the leaning vehicle of the present invention, the rear wheel braking force controller may not include the braking force level determination unit. In this case, the rear wheel braking force controller controls the electric actuator with reference to one transmission ratio map in which a throttle opening degree, engine rotation speed, vehicle speed and a transmission ratio are associated.

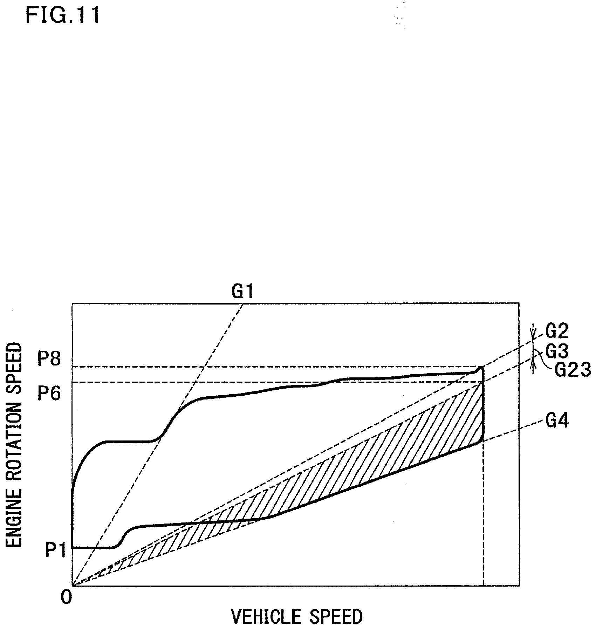

In the specific example of the embodiment above, the rear wheel braking force controller 120 controls the electric actuator with reference to the transmission ratio map A or the transmission ratio map B, which is a transmission ratio map in which a throttle opening degree, engine rotation speed, vehicle speed, and a transmission ratio are associated. However, the transmission ratio map in which a throttle opening degree, engine rotation speed, vehicle speed, and a transmission ratio are associated is not limited to the transmission ratio map A or the transmission ratio map B. FIG. 11 shows a modification of a transmission ratio map in which a throttle opening degree, engine rotation speed, vehicle speed, and a transmission ratio are associated. As shown in FIG. 11, during a part of the period from the shift from the maximum speed Q5 to the deceleration state of the motorcycle 1 to the stop of the motorcycle 1, the motorcycle 1 may be controlled by the rear wheel braking force controller 120 so that the relationship between the engine rotation speed, the vehicle speed, and the transmission ratio passes through the hatched area in the figure.

The leaning vehicle of the present invention may have plural types of transmission ratio maps in each of which a throttle opening degree, engine rotation speed, vehicle speed, and a transmission ratio are associated. In accordance with the driving condition of the leaning vehicle, a transmission ratio map of one type may be switched to a transmission ratio map of another type. For example, in accordance with the accelerator operation speed or the vehicle speed, a transmission ratio map of one type may be switched to a transmission ratio map of another type. Alternatively, a rider may switch a transmission ratio map of one type to a transmission ratio map of another type by using a switch, etc.

In the specific example of the embodiment above, the electric actuator 70 is arranged to be able to change the groove width of the primary pulley 42. Alternatively, in the present invention, the electric actuator may be arranged to be able to change the groove width of the secondary pulley.

In the embodiment above and its specific example, the rear wheel braking force controller 120 includes the electric actuator 70 and the crankshaft motor generator 90. The invention, however, is not limited to this arrangement. In the present invention, the rear wheel braking force controller may include only the electric actuator among the electric actuator, the crankshaft motor generator, and the rear wheel motor generator. Alternatively, in the present invention, the rear wheel braking force controller may include only the rear wheel motor generator among the electric actuator, the crankshaft motor generator, and the rear wheel motor generator. In these cases, the rubber-belt-type continuously variable transmission device is an electronically-controlled continuously variable transmission in the same manner as in the specific example above.

In the embodiment above and its specific example, the rear wheel braking force controller 120 incudes the electric actuator 70 and the crankshaft motor generator 90. The invention, however, is not limited to this arrangement. In the present invention, the rear wheel braking force controller may include only the crankshaft motor generator or only the rear wheel motor generator. Alternatively, in the present invention, the rear wheel braking force controller may include the crankshaft motor generator and the rear wheel motor generator among the electric actuator, the crankshaft motor generator, and the rear wheel motor generator. In these cases, the groove width of the groove of the primary sheave or the secondary sheave of the continuously variable transmission device is not controlled by the electric actuator. In other words, the rubber-belt-type continuously variable transmission device in these cases is a continuously variable transmission (CVT) different from the transmission in the specific example above. The rubber-belt-type continuously variable transmission device is, for example, a weight-type continuously variable transmission device. When the rubber-belt-type continuously variable transmission device is a weight-type continuously variable transmission device, the groove width of the groove of each of the primary sheave and the secondary sheave is changed by a weight.

In the specific example of the embodiment above, the throttle valve 29a is an electronically-controlled throttle. The invention, however, is not limited to this arrangement. The leaning vehicle of the present invention may employ a wire-type throttle.

In the specific example of the embodiment above, the crankshaft 21 and the primary shaft portion 41 are integrally formed. The invention, however, is not limited to this arrangement. In the leaning vehicle of the present invention, the crankshaft and the primary shaft portion may be independent from each other. In other words, while in the embodiment above the crankshaft 21 and the primary shaft portion 41 are coaxial, the invention is not limited to this arrangement. In the leaning vehicle of the present invention, the crankshaft and the primary shaft portion may not be coaxial.

In the specific example of the embodiment above, the engine main body unit 20 is mounted on the vehicle body frame 7 with its cylinder axial line being tilted greatly forward. The invention, however, is not limited to this arrangement. In the leaning vehicle of the present invention, the engine main body unit may be mounted on the vehicle body frame so that the cylinder axial line extends along the vehicle up-down direction. The inclination angle of the cylinder axial line with respect to the horizontal direction is 45 degrees or greater and 90 degrees or less.

The engine main body unit of the engine unit of the present invention may be a multi-cylinder engine which is not a two-cylinder engine. The engine main body unit of the engine unit of the present invention may be a two-stroke engine. The engine main body unit of the engine unit of the present invention may be a natural air-cooled engine. The engine main body unit of the engine unit of the present invention may be a water-cooled engine.

In the embodiment above and its specific example, the leaning vehicle is a motorcycle, for example. In the present invention, the leaning vehicle may be a vehicle of any type as long as the vehicle includes a rubber-belt-type continuously variable transmission device and a vehicle body frame which leans rightward when turning right and leans leftward when turning left. The leaning vehicle of the present invention may be a straddled vehicle which is not a motorcycle. The straddled vehicle indicates all types of vehicles on which a driver rides in a manner of straddling a saddle. The leaning vehicle includes a motorcycle, a tricycle, etc. The leaning vehicle of the present invention may be a tricycle or a four-wheeled vehicle. The leaning vehicle of the present invention may not be a straddled vehicle. The leaning vehicle of the present invention may include two or more front wheels. The leaning vehicle of the present invention may include two or more rear wheels. The vehicle body frame is not limited to a pipe frame, and may be a plate-shaped frame.

### [Reference Signs List]

- 1, 201: motorcycle (leaning vehicle)
- 2: front wheel
- 3: rear wheel
- 7: vehicle body frame
- 20: engine main body unit (engine)
- 21: crankshaft
- 30: rubber-belt-type continuously variable transmission device
- 32: rubber belt
- 42: primary pulley
- 42a: groove
- 52: secondary pulley
- 52a: groove
- 70: electric actuator
- 80: rear wheel motor generator
- 90: crankshaft motor generator
- 120, 220: rear wheel braking force controller

## Claims

1. A leaning vehicle (1, 201) comprising:
a vehicle body frame (7) which is configured to lean rightward of the vehicle (1, 201) when turning right and to lean leftward of the vehicle when turning left;
an engine (20) which is supported by the vehicle body frame (7) and includes a crankshaft (21) by which power is transmitted;
at least one front wheel (2);
at least one rear wheel (3) which is provided rearward of the at least one front wheel (2) in a vehicle front-rear direction;
a rubber-belt-type continuously variable transmission device (30) which includes a primary sheave (42) connected to the crankshaft (21) to be able to transmit power to the crankshaft (21), a secondary sheave (52) connected to the at least one rear wheel (3) to be able to transmit power to the at least one rear wheel (3), and a rubber belt (32) wound into a groove (42a) formed in the primary sheave (42) and a groove (52a) formed in the secondary sheave (52) so that a winding diameter of the rubber belt (32) is changeable, the rubber-belt-type continuously variable transmission device (30) being configured to transmit power of the engine (20) from the crankshaft (21) to the at least one rear wheel (3); and
a rear wheel braking force controller (120, 220) which is configured to control braking force applied to the at least one rear wheel (3) and includes at least one of:
(a) an electric actuator (70) which is configured to change the winding diameter of the rubber belt (32) of the rubber-belt-type continuously variable transmission device (30);
(b) a crankshaft motor generator (90) configured to absorb torque transmitted from the crankshaft (21) to the primary sheave (42) and to apply torque to the crankshaft (21); or
(c) a rear wheel motor generator (80) configured to absorb torque from the at least one rear wheel (3) and to apply torque to the at least one rear wheel (3),
the leaning vehicle being **characterized in that**,
the rubber-belt-type continuously variable transmission device (30) is arranged so that a difference between a maximum speed transmission ratio which is a transmission ratio when the leaning vehicle (1, 201) accelerates and reaches maximum speed and a minimum transmission ratio which is a minimum transmission ratio during a period in which the leaning vehicle (1, 201) decelerates from the maximum speed and ends the deceleration is larger than a rubber belt change amount which is an amount of change of the transmission ratio due to deflection of the rubber belt (32) when the leaning vehicle (1, 201) reaches the maximum speed and then shifts to a deceleration state, and
at least after the leaning vehicle (1, 201) reaches the maximum speed and then shifts to the deceleration state, at least one of the electric actuator (70), the crankshaft motor generator (90), or the rear wheel motor generator (80) is configured to control the braking force applied to the at least one rear wheel (3).

2. The leaning vehicle (1, 201) according to claim 1, wherein
the rear wheel braking force controller (120, 220) includes the electric actuator (70), and
at least after the leaning vehicle (1, 201) reaches the maximum speed and then shifts to the deceleration state, the electric actuator (70) is configured to control the braking force applied to the at least one rear wheel (3) by adjusting an amount of increase of the winding diameter of the rubber belt (32) on the primary sheave (42).

3. The leaning vehicle (1, 201) according to claim 1, wherein
the rear wheel braking force controller (120, 220) includes the crankshaft motor generator (90), and
at least after the leaning vehicle (1, 201) reaches the maximum speed and then shifts to the deceleration state, the crankshaft motor generator (90) is configured to control the braking force applied to the at least one rear wheel (3) by adjusting an amount of increase of the torque absorbed from the crankshaft (21).

4. The leaning vehicle (1, 201) according to claim 1, wherein
the rear wheel braking force controller (120, 220) includes the rear wheel motor generator (80), and
at least after the leaning vehicle (1, 201) reaches the maximum speed and then shifts to the deceleration state, the rear wheel motor generator (80) is configured to control the braking force applied to the at least one rear wheel (3) by adjusting an amount of increase of the torque absorbed from the at least one rear wheel (3).

5. The leaning vehicle (1, 201) according to any one of claims 1 to 4, wherein the rear wheel braking force controller (120, 220) is configured to change control of the braking force applied to the at least one rear wheel (3) by using at least one of the electric actuator (70), the crankshaft motor generator (90), or the rear wheel motor generator (80), in accordance with a running state of the leaning vehicle (1, 201).

6. The leaning vehicle (1, 201) according to claim 5, wherein, when a small braking force condition is satisfied, the rear wheel braking force controller (120, 220) is configured to control the braking force applied to the at least one rear wheel (3) to be smaller than braking force when the small braking force condition is not satisfied, the small braking force condition being a condition in which a running state of the leaning vehicle (1, 201) corresponds to at least one of a case where the leaning vehicle (1, 201) runs down a slope having an inclination angle equal to or smaller than a gradual slope angle, a case where at least two riders ride on the leaning vehicle (1, 201), a case where the leaning vehicle (1, 201) runs on a congested road, or a case where the leaning vehicle (1, 201) runs on a road in an urban area or a residential area.

7. The leaning vehicle (1, 201) according to claim 5 or 6, wherein, when a large braking force condition is satisfied, the rear wheel braking force controller (120, 220) is configured to control the braking force applied to the at least one rear wheel (3) to be larger than braking force in a case where the large braking force condition is not satisfied, the large braking force condition being a condition in which a running state of the leaning vehicle (1, 201) corresponds to at least one of a case where the leaning vehicle (1, 201) overtakes a vehicle running in front of the leaning vehicle (1, 201) in a vehicle front-rear direction, a case where the leaning vehicle (1, 201) runs down a slope having a larger inclination angle than the gradual slope angle, a case where a luggage is mounted on the leaning vehicle (1, 201), a case where distance in the vehicle front-rear direction between the leaning vehicle (1, 201) and a vehicle running in front of the leaning vehicle (1, 201) in the vehicle front-rear direction is short, or a case where a signal in front of the leaning vehicle (1, 201) in the vehicle front-rear direction indicates stop.

## Patentansprüche

1. Ein Neigungsfahrzeug (1, 201), das folgende Merkmale aufweist:
einen Fahrzeugkörperrahmen (7), der konfiguriert ist, sich beim Rechtsabbiegen nach rechts von dem Fahrzeug (1, 201) zu lehnen und beim Linksabbiegen nach links von dem Fahrzeug zu lehnen;
einen Motor (20), der durch den Fahrzeugkörperrahmen (7) getragen wird und eine Kurbelwelle (21) umfasst, durch die Leistung übertragen wird;
zumindest ein Vorderrad (2);
zumindest ein Hinterrad (3), das in einer Fahrzeug-Vorne-Hinten-Richtung hinter dem zumindest einen Vorderrad (2) vorgesehen ist;
eine kontinuierlich veränderliche Übersetzungsvorrichtung (30) vom Gummiriementyp, die eine primäre Riemenscheibe (242) umfasst, die mit der Kurbelwelle (21) verbunden ist, um Leistung zu der Kurbelwelle (21) übertragen zu können, eine sekundäre Riemenscheibe (52), die mit dem zumindest einen Hinterrad (3) verbunden ist, um Leistung zu dem zumindest einen Hinterrad (3) übertragen zu können, und einen Gummiriemen (32), der in eine Rille (42a), die in der primären Riemenscheibe (42) gebildet ist, und in eine Rille (52a), die in der sekundären Riemenscheibe (52) gebildet ist, gewickelt ist, so dass ein Windungsdurchmesser des Gummiriemens (32) veränderbar ist, wobei die kontinuierlich veränderliche Übersetzungsvorrichtung (30) vom Gummiriementyp konfiguriert ist, Leistung des Motors (20) von der Kurbelwelle (21) zu dem zumindest einen Hinterrad (3) zu übertragen; und
eine Hinterradbremskraftsteuerung (120, 220), die konfiguriert ist, eine Bremskraft, die an das zumindest eine Hinterrad (3) angelegt ist, zu steuern, und zumindest eines der Folgenden umfasst:
(a) eine elektrische Betätigungsvorrichtung (70), die konfiguriert ist, den Windungsdurchmesser des Gummiriemens (32) der kontinuierlich veränderlichen Übersetzungsvorrichtung (30) vom Gummiriementyp zu ändern;
(b) einen Kurbelwellenmotorgenerator (90), der konfiguriert ist, ein Drehmoment, das von der Kurbelwelle (21) zu der primären Riemenscheibe (42) übertragen wird, zu absorbieren, und ein Drehmoment an die Kurbelwelle (21) anzulegen; oder
(c) einen Hinterradmotorgenerator (80), der konfiguriert ist, ein Drehmoment von dem zumindest einen Hinterrad (3) zu absorbieren und ein Drehmoment an das zumindest eine Hinterrad (3) anzulegen,
wobei das Neigungsfahrzeug **dadurch gekennzeichnet ist, dass**
die kontinuierlich veränderliche Übersetzungsvorrichtung (30) vom Gummiriementyp angeordnet ist, so dass eine Differenz zwischen einem Maximalgeschwindigkeit-Übersetzungsverhältnis, welches ein Übersetzungsverhältnis ist, wenn das Neigungsfahrzeug (1, 201) beschleunigt und eine Maximalgeschwindigkeit erreicht, und einem minimalen Übersetzungsverhältnis, welches ein minimales Übersetzungsverhältnis während einer Periode ist, in der das Neigungsfahrzeug (1, 201) von der Maximalgeschwindigkeit abbremst und die Abbremsung beendet, größer ist als ein Gummiriemenänderungsbetrag, welcher ein Änderungsbetrag des Übersetzungsverhältnisses aufgrund einer Ablenkung des Gummiriemens (32) ist, wenn das Neigungsfahrzeug (1, 201) die Maximalgeschwindigkeit erreicht und dann in einen Abbremszustand schaltet und
zumindest nachdem das Neigungsfahrzeug (1, 201) die Maximalgeschwindigkeit erreicht und dann in den Abbremszustand schaltet, zumindest entweder die elektrische Betätigungsvorrichtung (70), der Kurbelwellenmotorgenerator (90) oder der Hinterradmotorgenerator (80) konfiguriert ist, die Bremskraft zu steuern, die an das zumindest eine Hinterrad (3) angelegt ist.

2. Das Neigungsfahrzeug (1, 201) gemäß Anspruch 1, bei dem
die Hinterradbremskraftsteuerung (120, 220) die elektrische Betätigungsvorrichtung (70) umfasst und
zumindest nachdem das Neigungsfahrzeug (1, 201) die Maximalgeschwindigkeit erreicht und dann in den Abbremszustand schaltet, die elektrische Betätigungsvorrichtung (70) konfiguriert ist, die Bremskraft, die an das zumindest eine Hinterrad (3) angelegt ist, durch Einstellen eines Anstiegsbetrags des Windungsdurchmessers des Gummiriemens (32) auf der primären Riemenscheibe (42) zu steuern.

3. Das Neigungsfahrzeug (1, 201) gemäß Anspruch 1, bei dem
die Hinterradbremskraftsteuerung (120, 220) den Kurbelwellenmotorgenerator (90) umfasst und
zumindest nachdem das Neigungsfahrzeug (1, 201) die Maximalgeschwindigkeit erreicht und dann in den Abbremszustand schaltet, der Kurbelwellenmotorgenerator (90) konfiguriert ist, die Bremskraft, die an das zumindest eine Hinterrad (3) angelegt ist, durch Einstellen eines Anstiegsbetrags des Drehmoments zu steuern, das von der Kurbelwelle (21) absorbiert wird.

4. Das Neigungsfahrzeug (1, 201) gemäß Anspruch 1, bei dem
die Hinterradbremskraftsteuerung (120, 220) den Hinterradmotorgenerator (80) umfasst und
zumindest nachdem das Neigungsfahrzeug (1, 201) die Maximalgeschwindigkeit erreicht und dann in den Abbremszustand schaltet, der Hinterradmotorgenerator (80) konfiguriert ist, die Bremskraft, die an das zumindest eine Hinterrad (3) angelegt ist, durch Einstellen eines Anstiegsbetrags des Drehmoments zu steuern, das von dem zumindest einen Hinterrad (3) absorbiert wird.

5. Das Neigungsfahrzeug (1, 201) gemäß einem der Ansprüche 1 bis 4, bei dem die Hinterradbremskraftsteuerung (120, 220) konfiguriert ist, eine Steuerung der Bremskraft, die an das zumindest eine Hinterrad (3) angelegt ist, zu ändern durch Verwenden zumindest entweder der elektrischen Betätigungsvorrichtung (70), des Kurbelwellenmotorgenerators (90) oder des Hinterradmotorgenerators (80), gemäß einem Betriebszustand des Neigungsfahrzeugs (1, 201).

6. Das Neigungsfahrzeug (1, 201) gemäß Anspruch 5, bei dem, wenn eine Bedingung mit geringer Bremskraft erfüllt ist, die Hinterradbremskraftsteuerung (120, 220) konfiguriert ist, die Bremskraft, die an das zumindest eine Hinterrad (3) angelegt ist, zu steuern, so dass dieselbe geringer ist als eine Bremskraft, wenn die Bedingung mit geringer Bremskraft nicht erfüllt ist, wobei die Bedingung mit geringer Bremskraft eine Bedingung ist, bei der ein Betriebszustand des Neigungsfahrzeugs (1, 201) zumindest entweder einem Fall, wo das Neigungsfahrzeug (1, 201) einen Hang mit einem Neigungswinkel hinunterfährt, der gleich wie oder kleiner als ein flacher Hangwinkel ist, einem Fall, wo zumindest zwei Fahrer auf dem Neigungsfahrzeug (1, 201) fahren, einem Fall, wo das Neigungsfahrzeug (1, 201) auf einer überfüllten Straße fährt, oder einem Fall entspricht, wo das Neigungsfahrzeug (1, 201) auf einer Straße in einem Stadtgebiet oder einem Wohngebiet fährt.

7. Das Neigungsfahrzeug (1, 201) gemäß Anspruch 5 oder 6, bei dem, wenn eine Bedingung mit großer Bremskraft erfüllt ist, die Hinterradbremskraftsteuerung (120, 220) konfiguriert ist, die Bremskraft, die an das zumindest eine Hinterrad (3) angelegt ist, zu steuern, so dass dieselbe größer ist als eine Bremskraft in einem Fall, wo die Bedingung mit großer Bremskraft nicht erfüllt ist, wobei die Bedingung mit großer Bremskraft eine Bedingung ist, bei der ein Betriebszustand des Neigungsfahrzeugs (1, 201) zumindest entweder einem Fall, wo das Neigungsfahrzeug (1, 201) ein Fahrzeug, das in einer Fahrzeug-Vorne-Hinten-Richtung vor dem Neigungsfahrzeug (1, 201) fährt, überholt, einem Fall, wo das Neigungsfahrzeug (1, 201) einen Hang mit einem Neigungswinkel hinunterfährt, der größer als der flache Hangwinkel ist, einem Fall, wo ein Gepäckstück auf dem Neigungsfahrzeug (1, 201) befestigt ist, einem Fall, wo in der Fahrzeug-Vorne-Hinten-Richtung ein Abstand zwischen dem Neigungsfahrzeug (1, 201) und einem Fahrzeug, das in der Fahrzeug-Vorne-Hinten-Richtung vor dem Neigungsfahrzeug (1, 201) fährt, kurz ist, oder einem Fall entspricht, wo ein Signal in der Fahrzeug-Vorne-Hinten-Richtung vor dem Neigungsfahrzeug (1, 201) Stopp anzeigt.

## Revendications

1. Véhicule inclinable (1, 201) comprenant:
un châssis de carrosserie de véhicule (7) qui est configuré pour s'incliner vers la droite du véhicule (1, 201) lors d'un virage à droite et pour s'incliner vers la gauche du véhicule lors d'un virage à gauche;
un moteur (20) qui est supporté par le châssis de carrosserie de véhicule (7) et qui comporte un vilebrequin (21) par lequel est transmise la puissance;
au moins une roue avant (2);
au moins une roue arrière (3) qui est prévue à l'arrière de l'au moins une roue avant (2) dans une direction avant-arrière du véhicule;
un dispositif de transmission à variation continue de type à courroie en caoutchouc (30) qui comporte une poulie primaire (42) connectée au vilebrequin (21) de manière à pouvoir transmettre de la puissance au vilebrequin (21), une poulie secondaire (52) connectée à l'au moins une roue arrière (3) de manière à pouvoir transmettre de la puissance à l'au moins une roue arrière (3), et une courroie en caoutchouc (32) enroulée dans une rainure (42a) formée dans la poulie primaire (42) et une rainure (52a) formée dans la poulie secondaire (52) de sorte que soit modifiable un diamètre d'enroulement de la courroie en caoutchouc (32), le dispositif de transmission à variation continue de type à courroie en caoutchouc (30) étant configuré pour transmettre la puissance du moteur (20) du vilebrequin (21) à l'au moins une roue arrière (3); et
un moyen de commande de force de freinage de roue arrière (120, 220) qui est configuré pour réguler la force de freinage appliquée à l'au moins une roue arrière (3) et qui comporte au moins l'un parmi:
(a) un actionneur électrique (70) qui est configuré pour modifier le diamètre d'enroulement de la courroie en caoutchouc (32) du dispositif de transmission à variation continue de type à courroie en caoutchouc (30);
(b) un moteur-générateur à vilebrequin (90) configuré pour absorber le couple transmis du vilebrequin (21) à la poulie primaire (42) et pour appliquer le couple au vilebrequin (21); ou
(c) un moteur-générateur de roue arrière (80) configuré pour absorber le couple de l'au moins une roue arrière (3) et pour appliquer le couple à l'au moins une roue arrière (3),
le véhicule inclinable étant **caractérisé par le fait que**
le dispositif de transmission à variation continue de type à courroie en caoutchouc (30) est disposé de sorte qu'une différence entre un rapport de transmission de vitesse maximum, qui est un rapport de transmission lorsque le véhicule incliné (1, 201) accélère et atteint une vitesse maximale, et un rapport de transmission minimum, qui est un rapport de transmission minimum pendant un laps de temps au cours duquel le véhicule inclinable (1, 201) décélère à partir de la vitesse maximale et termine la décélération, soit supérieure à une quantité de variation de courroie en caoutchouc, qui est une quantité de variation du rapport de transmission due à la déviation de la courroie en caoutchouc (32) lorsque le véhicule inclinable (1, 201) atteint la vitesse maximale et passe ensuite à un état de décélération, et
au moins après que le véhicule inclinable (1, 201) atteint la vitesse maximale et passe ensuite à l'état de décélération, au moins l'un parmi l'actionneur électrique (70), le moteur-générateur à vilebrequin (90) ou le moteur-générateur de roue arrière (80) est configuré pour réguler la force de freinage appliquée à l'au moins une roue arrière (3).

2. Véhicule inclinable (1, 201) selon la revendication 1, dans lequel
le moyen de commande de force de freinage de roue arrière (120, 220) comporte l'actionneur électrique (70), et
au moins après que le véhicule inclinable (1, 201) atteint la vitesse maximale et passe ensuite à l'état de décélération, l'actionneur électrique (70) est configuré pour réguler la force de freinage appliquée à l'au moins une roue arrière (3) en ajustant une quantité d'augmentation du diamètre d'enroulement de la courroie en caoutchouc (32) sur la poulie primaire (42).

3. Véhicule inclinable (1, 201) selon la revendication 1, dans lequel
le moyen de commande de force de freinage de roue arrière (120, 220) comporte le moteur-générateur à vilebrequin (90), et
au moins après que le véhicule inclinable (1, 201) atteint la vitesse maximale et passe ensuite à l'état de décélération, le moteur-générateur à vilebrequin (90) est configuré pour réguler la force de freinage appliquée à l'au moins une roue arrière (3) en ajustant une quantité d'augmentation du couple absorbé par le vilebrequin (21).

4. Véhicule inclinable (1, 201) selon la revendication 1, dans lequel
le moyen de commande de force de freinage de roue arrière (120, 220) comporte le moteur-générateur de roue arrière (80), et
au moins après que le véhicule inclinable (1, 201) atteint la vitesse maximale et passe ensuite à l'état de décélération, le moteur-générateur de roue arrière (80) est configuré pour réguler la force de freinage appliquée à l'au moins une roue arrière (3) en ajustant une quantité d'augmentation du couple absorbé par l'au moins une roue arrière (3).

5. Véhicule inclinable (1, 201) selon l'une quelconque des revendications 1 à 4, dans lequel le moyen de commande de force de freinage de roue arrière (120, 220) est configuré pour modifier la commande de la force de freinage appliquée à l'au moins une roue arrière (3) à l'aide d'au moins l'un parmi l'actionneur électrique (70), le moteur-générateur à vilebrequin (90) ou le moteur-générateur de roue arrière (80), selon un état de circulation du véhicule inclinable (1, 201).

6. Véhicule inclinable (1, 201) selon la revendication 5, dans lequel, lorsqu'une condition de faible force de freinage est remplie, le moyen de commande de force de freinage de roue arrière (120, 220) est configuré pour réguler la force de freinage appliquée à l'au moins une roue arrière (3) de manière à être inférieure à la force de freinage lorsque la condition de faible force de freinage n'est pas remplie, la condition de faible force de freinage étant une condition dans laquelle un état de circulation du véhicule inclinable (1, 201) correspond à au moins l'un parmi un cas où le véhicule inclinable (1, 201) descend une pente présentant un angle d'inclinaison égal ou inférieur à un angle de pente progressif, un cas où au moins deux motocyclistes sont montés sur le véhicule inclinable (1, 201), un cas où le véhicule inclinable (1, 201) circule sur une route encombrée, ou un cas où le véhicule inclinable (1, 201) circule sur une route dans une zone urbaine ou une zone résidentielle.

7. Véhicule inclinable (1, 201) selon la revendication 5 ou 6, dans lequel, lorsqu'une condition de grande force de freinage est remplie, le moyen de commande de force de freinage de roue arrière (120, 220) est configuré pour réguler la force de freinage appliquée à l'au moins une roue arrière (3) de manière à être supérieure à la force de freinage dans un cas où la condition de grande force de freinage n'est pas remplie, la condition de grande force de freinage étant une condition dans laquelle un état de circulation du véhicule inclinable (1, 201) correspond à au moins l'un parmi un cas où le véhicule inclinable (1, 201) dépasse un véhicule roulant devant le véhicule inclinable (1, 201) dans une direction avant-arrière du véhicule, un cas où le véhicule inclinable (1, 201) descend une pente présentant un angle d'inclinaison supérieur à l'angle de pente progressif, un cas où un bagage est monté sur le véhicule inclinable (1, 201), un cas où la distance dans la direction avant-arrière du véhicule entre le véhicule inclinable (1, 201) et un véhicule circulant devant le véhicule inclinable (1, 201) dans la direction avant-arrière du véhicule est courte, ou un cas où un signe devant le véhicule inclinable (1, 201) dans la direction avant-arrière du véhicule indique un arrêt.
